# EUROPEAN PATENT APPLICATION

(11) **EP 4 572 461 A1**
(43) Date of publication of application: **18.06.2025**
(21) Application number: 23851406.1
(22) Date of filing: 27.06.2023
(51) Int. Cl.: H04W 72/04

(54) **COMMUNICATION METHOD AND APPARATUS**

(30) Priority: 10.08.2022 CN 202210957923
(71) Applicant: Datang Mobile Communications Equipment Co., Ltd., Beijing 100085 (CN)
(72) Inventor: SONG, Lei, Beijing 100085 (CN); GAO, Qiubin, Beijing 100085 (CN); HUANG, Qiuping, Beijing 100085 (CN); LUO, Yajuan, Beijing 100085 (CN); LI, Hui, Beijing 100085 (CN)
(74) Representative: Studio Torta S.p.A.
(86) International application number: PCT/CN2023/102896
(87) International publication number: WO 2024/032179

(57) **Abstract**

The present application provides a communication method and apparatus, and relates to the field of communication technology. The communication method includes: if *M* first uplink channels and *N* second uplink channels are to be sent on a first time domain resource, determining to multiplex uplink control information UCI corresponding to a target first uplink channel of the *M* first uplink channels to at least one second uplink channel of the *N* second uplink channels for transmission, and sending the at least one second uplink channel carrying the UCI; or, dropping at least one second uplink channel of the *N* second uplink channels, and/or, sending a target first uplink channel of the *M* first uplink channels which corresponds to the at least one second uplink channel; or, sending or dropping at least one second uplink channel corresponding to a target first uplink channel of the *M* first uplink channels; where *M* and *N* are not 1 simultaneously, and both *M* and *N* are integers greater than or equal to 1.

## Description

### CROSS-REFERENCE TO RELATED APPLICATIONS

This application claims priority to Chinese Patent Application No. 202210957923.0, entitled "COMMUNICATION METHOD AND APPARATUS" and filed with the China National Intellectual Property Administration on August 10, 2022, which is hereby incorporated by reference in its entirety.

### TECHNICAL FIELD

The present application relates to the field of communication technology and, in particular, to a communication method and apparatus.

### BACKGROUND

In a new radio (New Radio, NR) system, within a time domain resource, a terminal device may need to simultaneously transmit a physical uplink control channel (Physical Uplink Control Channel, PUCCH) and a physical uplink shared channel (Physical Uplink Shared Channel, PUSCH). In a case where a terminal device needs to simultaneously transmit multiple PUCCHs and/or multiple PUSCHs, there is currently no corresponding solution for how the terminal device specifically transmits uplink control information (Uplink Control Information, UCI) that should be carried on the PUCCH.

### SUMMARY

The present application provides a communication method and apparatus for providing a mechanism for transmitting UCI.

The communication method may be executed by a communication apparatus, such as a terminal device. For ease of description, the following description is made by taking a communication apparatus as an example.

In a first aspect, the present application provides a communication method, which is applied to a first communication apparatus, and the method includes:
if *M* first uplink channels and *N* second uplink channels are to be sent on a first time domain resource, determining to multiplex uplink control information UCI corresponding to a target first uplink channel of the *M* first uplink channels to at least one second uplink channel of the *N* second uplink channels for transmission, and sending the at least one second uplink channel carrying the DCI; or,
if *M* first uplink channels and *N* second uplink channels are to be sent on a first time domain resource, dropping at least one second uplink channel of the *N* second uplink channels, and/or, sending a target first uplink channel of the *M* first uplink channels which corresponds to the at least one second uplink channel; or,
if *M* first uplink channels and *N* second uplink channels are to be sent on a first time domain resource, determining, from the *N* second uplink channels, at least one second uplink channel corresponding to a target first uplink channel of the *M* first uplink channels, and sending or dropping the at least one second uplink channel corresponding to the target first uplink channel of the *M* first uplink channels;
where *M* and *N* are not 1 simultaneously, and both *M* and *N* are integers greater than or equal to 1.

In the present application, in the case where the first communication apparatus needs to send *M* first uplink channels and *N* second uplink channels on the first time domain resource, embodiments of the present application provide multiple solutions for sending uplink channels. In the first solution, the first communication apparatus may multiplex the UCI corresponding to the target first uplink channel of the *M* first uplink channels to at least one second uplink channel of the *N* second uplink channels for transmission, and only needs to send the at least one second uplink channel corresponding to the target first uplink channel, so that the first communication apparatus can not only send the UCI normally, but also reduce transmission amount. In the second solution, the first communication apparatus directly sends the target first uplink channel and drops at least one second uplink channel, so that the first communication apparatus can accurately send the target first uplink channel with a higher priority, ensuring that a receiving end can accurately receive the target first uplink channel. In a third solution, the first communication apparatus sends or drops at least one second uplink channel corresponding to the target first uplink channel of the *M* first uplink channels. Under this solution, the first communication apparatus can select to send the uplink channel with a higher priority according to priorities of information carried by the target first uplink channel and by the at least one second uplink channel, ensuring that the receiving end can preferentially receive the information with a higher priority.

In a possible implementation, the at least one second uplink channel and the target first uplink channel have same information on a transmission parameter and/or same information on a physical resource, and the transmission parameter is a higher-layer parameter corresponding to transmission of an uplink channel.

In this implementation, for the target first uplink channel and the at least one second uplink channel, the transmission parameter of the first uplink channel are the same, and/or for the target first uplink channel and the at least one second uplink channel, the physical resource of the first uplink channel are the same. This means that a transmission point (or an antenna panel) used for the first communication apparatus to transmit the target first uplink channel and a transmission point (or an antenna panel) used for the first communication apparatus to transmit the at least one second uplink channel are likely to be the same one. Accordingly, a transmission point at which a receiving end (such as a second communication apparatus) receives the target first uplink channel and a transmission point at which the receiving end receives the at least one second uplink channel are likely to be the same one, so that the receiving end can receive the UCI carried by the at least one second uplink channel at one transmission point. In this way, the one transmission point in the receiving end can directly decode the at least one second uplink channel to obtain the UCI by decoding, thereby avoiding a situation where multiple transmission points in the receiving end interactively decode the UCI, and thus facilitating reducing the difficulty and resource overhead of decoding the UCI at the receiving end.

In a possible implementation, the determining to multiplex the UCI corresponding to the target first uplink channel of the *M* first uplink channels to the at least one second uplink channel of the *N* second uplink channels for transmission includes: in a case where one or more first conditions are met, multiplexing the UCI corresponding to the target first uplink channel of the *M* first uplink channels to the at least one second uplink channel of the *N* second uplink channels for transmission;
where the first conditions include: the at least one second uplink channel and the target first uplink channel have a same index or state of a transmission configuration indication; or, the at least one second uplink channel and the target first uplink channel are both associated with a same control-resource-set related higher-layer parameter; or, there is an overlap between a frequency domain resource of the at least one second uplink channel and a frequency domain resource of the target first uplink channel; or, the at least one second uplink channel and the target first uplink channel are both indicated by same downlink control information (Downlink Control Information, DCI); or, an index of a resource block (Resource Block, RB) of the at least one second uplink channel meets a second condition; or, a resource of the at least one second uplink channel is associated with a resource or a resource group corresponding to the target first uplink channel.

In this implementation, the first communication apparatus can determine the at least one second uplink channel corresponding to the target first uplink channel by one or more of multiple first conditions mentioned above, that is, multiple modes are specifically provided to determine the at least one second uplink channel, so that the first communication apparatus can flexibly determine the at least one second uplink channel.

In a first mode, the index or the state of the transmission configuration indication is used to determine the at least one second uplink channel corresponding to the target first uplink channel. In this mode, the index or the state of the transmission configuration indication is configured by a beam of the receiving end, and the at least one second uplink channel, whose sending or receiving uses the same beam as the target first uplink channel, is used for UCI multiplexing, so that the UCI corresponding to the target first uplink channel can be received in one beam, reducing the number of interactions for calling UCI.

In a second mode, the first communication apparatus uses the control-resource-set related higher-layer parameter configured by the receiving end to determine the at least one second uplink channel corresponding to the target first uplink channel. The same control-resource-set related higher-layer parameter means a same transmission point, and thus the first communication apparatus can multiplex the UCI corresponding to the target first uplink channel to the at least one second uplink channel transmitted by the same transmission point. When receiving the UCI corresponding to the target first uplink channel, the receiving end can directly receive such UCI at one transmission point without a need for interacting with other transmission points to call the UCI corresponding to the target first uplink channel.

In a third mode, the first communication apparatus uses the overlapping situation of frequency domain resources to determine the at least one second uplink channel corresponding to the target first uplink channel. The first communication apparatus multiplexes the UCI corresponding to the target first uplink channel to the at least one second uplink channel, whose frequency domain resource position overlaps with a frequency domain resource position of the target first uplink channel, for transmission, so that the receiving end can receive the UCI corresponding to the target first uplink channel at a same transmission resource position when receiving such UCI.

In a fourth mode, the first communication apparatus uses the DCI indication to determine the at least one second uplink channel corresponding to the target first uplink channel. The first communication apparatus determines the at least one second uplink channel corresponding to the target first uplink channel according to the DCI indication of the receiving end, so that after the receiving end determines the target first uplink channel sent by the first communication apparatus, the receiving end can directly and accurately determine to receive the at least one second uplink channel corresponding to the target first uplink channel.

In a fifth mode, the first communication apparatus uses the index of the RB to determine the at least one second uplink channel corresponding to the target first uplink channel. The index of the RB of the first communication apparatus determines to multiplex the UCI corresponding to the target first uplink channel to the at least one second uplink channel corresponding to the target first uplink channel. The index of the RB is used to indicate a resource position of the at least one second uplink channel, so that when the receiving end receives the UCI corresponding to the target first uplink channel, the receiving end can determine to receive the UCI at the resource position corresponding to the at least one second uplink channel based on a same manner.

In a sixth mode, the first communication apparatus determines to multiplex the UCI corresponding to the target first uplink channel to the at least one second uplink channel according to an association relationship between the resource or the resource group of the target first uplink channel and the resource of the at least one second uplink channel, and then the first communication apparatus can directly determine the at least one second uplink channel associated with the target first uplink channel after determining the target first uplink channel. Correspondingly, the receiving end can also directly determine the at least one second uplink channel associated with the target first uplink channel, and such determination process is simpler.

In a possible implementation, the control-resource-set related higher-layer parameter includes CORESETPoolIndex, and the at least one second uplink channel and the target first uplink channel being both associated with the same control-resource-set related higher-layer parameter includes: the at least one second uplink channel and the target first uplink channel are both associated with a value of the same control-resource-set related higher-layer parameter; or, DCI for scheduling the at least one second uplink channel and DCI for scheduling the target first uplink channel are both associated with the same control-resource-set related higher-layer parameter.

In this implementation, the first communication apparatus can determine the at least one second uplink channel corresponding to the target first uplink channel by CORESETPoolIndex or by the control-resource-set related higher-layer parameter scheduled by the same DCI, which increases the determination modes for the first communication apparatus to determine the at least one second uplink channel, making the selection of the determination modes by the first communication apparatus more diverse.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In this implementation, the first communication apparatus may use multiple value conditions of the index of the RB to determine the at least one second uplink channel corresponding to the target first uplink channel, so that the first communication apparatus and the receiving end have a common understanding regardless of the value condition of the index of the RB. In other words, the receiving end can accurately receive the at least one second uplink channel corresponding to the target first uplink channel.

In a possible implementation, at least two first uplink channels of the *M* first uplink channels carry same information; and/or, at least two second uplink channels of the *N* second uplink channels carry same information.

In this implementation, the first communication apparatus may multiplex the UCI corresponding to the target first uplink channel or the UCI corresponding to multiple identical target first uplink channels to multiple second uplink channels to ensure that the receiving end can accurately receive the UCI corresponding to the target first uplink channel.

In a possible implementation, the target first uplink channel is the *M* first uplink channels; the determining to multiplex the UCI corresponding to the target first uplink channel of the *M* first uplink channels to the at least one second uplink channel of the *N* second uplink channels for transmission includes: determining to multiplex UCI corresponding to each first uplink channel of the M first uplink channels to at least one second uplink channel of the *N* second uplink channels for transmission.

In this implementation, the first communication apparatus may multiplex the UCI corresponding to each of multiple first uplink channels to the at least one second uplink channel, without a need for sending the multiple first uplink channels, further reducing the transmission amount of the first communication apparatus.

In a possible implementation, the determining to multiplex the UCI corresponding to each first uplink channel of the *M* first uplink channels to the at least one second uplink channel of the *N* second uplink channels for transmission includes: simultaneously or sequentially determining to multiplex the UCI corresponding to each first uplink channel of the *M* first uplink channels to the at least one second uplink channel of the *N* second uplink channels for transmission.

In this implementation, when the number of the *M* first uplink channels is more than one, the first communication apparatus can simultaneously determine or sequentially determine the at least one second uplink channel corresponding to the *M* first uplink channels based on an actual application scenario. Simultaneous determination is conducive to reducing the time for the first communication apparatus to determine the at least one second uplink channel corresponding to the target first uplink channel, thereby speeding up a transmission rate; while sequential determination is conducive to reducing a resource load pressure of the first communication apparatus.

In a possible implementation, at least one second uplink channel corresponding to one of any two first uplink channels of the *M* first uplink channels is same as or different from at least one second uplink channel corresponding to the other of the any two first uplink channels of the *M* first uplink channels.

In this implementation, the at least one second uplink channel corresponding to any two first uplink channels of the *M* first uplink channels determined by the first communication apparatus may be the same or different, so as to avoid a situation where after determining at least one second uplink channel corresponding to a target first uplink channel, the first communication apparatus fails to determine at least one second uplink channel corresponding to another target first uplink channel from the remaining second uplink channels of the *N* second uplink channels, resulting in the UCI of the another target first uplink channel not being transmitted.

In a possible implementation, after determining to multiplex the UCI corresponding to the target first uplink channel of the *M* first uplink channels to the at least one second uplink channel of the *N* second uplink channels for transmission, the method further includes: deleting or updating first information, where the first information includes a serial number of the at least one second uplink channel.

In this implementation, when the first communication apparatus sequentially determines the at least one second uplink channel corresponding to each of the *M* first uplink channels, the first communication apparatus may delete or update information of the at least one second uplink channel to avoid duplication between at least one second uplink channel corresponding to a next first uplink channel and the at least one second uplink channel corresponding to the first uplink channel previous to the next first uplink channel, so that the first communication apparatus can accurately determine the at least one second uplink channel corresponding to the next first uplink channel from the remaining second uplink channels.

In a possible implementation, it is determined that the at least one second uplink channel has an ability to carry the DCI; and/or, it is determined that a time difference between an instant at which the at least one second uplink channel is sent and an instant at which the target first uplink channel is sent is less than or equal to a first time difference.

In this implementation, each of the at least one second uplink channel determined by the first communication apparatus meets a multiplexing condition, and then when the first communication apparatus multiplexes the UCI to the at least one second uplink channel for transmission, it is ensured that the receiving end can receive the at least one second uplink channel within a preset time difference, and after the at least one second uplink channel is demodulated, intact UCI can be obtained.

In a possible implementation, the dropping the at least one second uplink channel of the *N* second uplink channels includes: in a case where one or more first conditions are met, dropping the at least one second uplink channel of the N second uplink channels;
where the first conditions include: the at least one second uplink channel and the target first uplink channel have a same index or state of a transmission configuration indication; or, the at least one second uplink channel and the target first uplink channel are both associated with a same control-resource-set related higher-layer parameter; or, there is an overlap between a frequency domain resource of the at least one second uplink channel and a frequency domain resource of the target first uplink channel; or, the at least one second uplink channel and the target first uplink channel are both indicated by same DCI; or, an index of an RB of the at least one second uplink channel meets a second condition; or, a resource of the at least one second uplink channel is associated with a resource or a resource group corresponding to the target first uplink channel.

In a possible implementation, the control-resource-set related higher-layer parameter includes CORESETPoolIndex, and the at least one second uplink channel and the target first uplink channel being both associated with the same control-resource-set related higher-layer parameter includes: the at least one second uplink channel and the target first uplink channel are both associated with a value of the same control-resource-set related higher-layer parameter; or, DCI for scheduling the at least one second uplink channel and DCI for scheduling the target first uplink channel are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a possible implementation, at least two first uplink channels of the *M* first uplink channels carry same information; and/or, at least two second uplink channels of the *N* second uplink channels carry same information.

In a possible implementation, at least one second uplink channel corresponding to one of any two first uplink channels of the *M* first uplink channels is same as or different from at least one second uplink channel corresponding to the other of the any two first uplink channels of the *M* first uplink channels.

In a possible implementation, the determining, from the *N* second uplink channels, the at least one second uplink channel corresponding to the target first uplink channel of the *M* first uplink channels, and sending or dropping the at least one second uplink channel corresponding to the target first uplink channel of the *M* first uplink channels include: in a case where one or more first conditions are met, sending or dropping the at least one second uplink channel which is determined from the *N* second uplink channels and corresponds to the target first uplink channel of the *M* first uplink channels;
where the first conditions include: determining, from the *N* second uplink channels, at least one second uplink channel which has a same index or state of a transmission configuration indication as the target first uplink channel; or, determining, from the *N* second uplink channels, at least one second uplink channel which is associated with a same control-resource-set related higher-layer parameter as the target first uplink channel; or, determining, from the *N* second uplink channels, at least one second uplink channel of which a frequency domain resource overlaps with a frequency domain resource of the target first uplink channel; or, determining, from the *N* second uplink channels, at least one second uplink channel which is indicated by same DCI as the target first uplink channel; or, determining, from the *N* second uplink channels, at least one second uplink channel of which an index of an RB meets a second condition; or, determining, from the *N* second uplink channels, at least one second uplink channel of which a resource is associated with a resource or a resource group corresponding to the target first uplink channel.

In a possible implementation, the control-resource-set related higher-layer parameter includes CORESETPoolIndex, and the determining, from the *N* second uplink channels, the at least one second uplink channel which is associated with the same control-resource-set related higher-layer parameter as the target first uplink channel includes: determining, from the *N* second uplink channels, at least one second uplink channel which is associated with a value of the same control-resource-set related higher-layer parameter as the target first uplink channel; or, determining, from the *N* second uplink channels, at least one second uplink channel, where downlink control information for scheduling the at least one second uplink channel and downlink control information for scheduling the target first uplink channel are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a possible implementation, at least two first uplink channels of the *M* first uplink channels carry same information; and/or, at least two second uplink channels of the N second uplink channels carry same information.

In a possible implementation, at least one second uplink channel corresponding to one of any two first uplink channels of the *M* first uplink channels is same as or different from at least one second uplink channel corresponding to the other of the any two first uplink channels of the *M* first uplink channels.

In a possible implementation, the UCI corresponding to the target first uplink channel includes a hybrid automatic repeat request, channel state information, or a positive scheduling request.

In a possible implementation, the first uplink channels are physical uplink control channels; the second uplink channels are physical uplink shared channels.

In a second aspect, the present application provides a communication method, which is applied to a second communication apparatus, and the method includes:
if a first communication apparatus is to send *M* first uplink channels and *N* second uplink channels on a first time domain resource: receiving at least one second uplink channel on the first time domain resource, where the at least one second uplink channel is used to carry DCI; demodulating the at least one second uplink channel to obtain at least one piece of UCI, where information included in each of the at least one piece of UCI is same, or, information included in each of the at least one piece of UCI is different; or,
if a first communication apparatus is to send *M* first uplink channels and *N* second uplink channels on a first time domain resource, and the first communication apparatus drops at least one second uplink channel of the *N* second uplink channels, and/or, sends a target first uplink channel of the *M* first uplink channels which corresponds to the at least one second uplink channel: receiving, within the first time domain resource, the target first uplink channel corresponding to the at least one second uplink channel, and demodulating the target first uplink channel to obtain DCI; or,
if a first communication apparatus is to send *M* first uplink channels and *N* second uplink channels on a first time domain resource, and the first communication apparatus determines at least one second uplink channel corresponding to a target first uplink channel of the *M* first uplink channels from the *N* second uplink channels, and sends or drops the at least one second uplink channel corresponding to the target first uplink channel of the *M* first uplink channels: receiving the at least one second uplink channel within the first time domain resource;
where *M* and *N* are not 1 simultaneously, and both *M* and *N* are integers greater than or equal to 1.

In a possible implementation, the at least one second uplink channel and the target first uplink channel have same information on a transmission parameter and/or same information on a physical resource, and the transmission parameter is a higher-layer parameter corresponding to transmission of an uplink channel.

In a possible implementation, the at least one second uplink channel meets a first condition, and the first condition includes: the at least one second uplink channel and the target first uplink channel have a same index or state of a transmission configuration indication; or, the at least one second uplink channel and the target first uplink channel are both associated with a same control-resource-set related higher-layer parameter; or, there is an overlap between a frequency domain resource of the at least one second uplink channel and a frequency domain resource of the target first uplink channel; or, the at least one second uplink channel and the target first uplink channel are both indicated by same DCI; or, an index of an RB of the at least one second uplink channel meets a second condition; or, a resource of the at least one second uplink channel is associated with a resource or a resource group corresponding to the target first uplink channel.

In a possible implementation, the control-resource-set related higher-layer parameter includes CORESETPoolIndex, and the at least one second uplink channel and the target first uplink channel being both associated with the same control-resource-set related higher-layer parameter includes: the at least one second uplink channel and the target first uplink channel are both associated with a value of the same control-resource-set related higher-layer parameter; or, DCI for scheduling the at least one second uplink channel and DCI for scheduling the target first uplink channel are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a possible implementation, the receiving the at least one second uplink channel further includes: simultaneously or sequentially receiving the at least one second uplink channel.

In a possible implementation, the sequentially receiving the at least one second uplink channel includes: deleting or updating first information, where the first information includes a serial number of the at least one second uplink channel.

In a possible implementation, it is determined that the at least one second uplink channel has an ability to carry the DCI; and/or, it is determined that a time difference between an instant at which the at least one second uplink channel is sent and an instant at which the target first uplink channel is sent is less than or equal to a first time difference.

In a possible implementation, the dropping the at least one second uplink channel of the *N* second uplink channels includes: in a case where one or more first conditions are met, dropping the at least one second uplink channel of the *N* second uplink channels;
where the first conditions include: the at least one second uplink channel and the target first uplink channel have a same index or state of a transmission configuration indication; or, the at least one second uplink channel and the target first uplink channel are both associated with a same control-resource-set related higher-layer parameter; or, there is an overlap between a frequency domain resource of the at least one second uplink channel and a frequency domain resource of the target first uplink channel; or, the at least one second uplink channel and the target first uplink channel are both indicated by same DCI; or, an index of an RB of the at least one second uplink channel meets a second condition; or, a resource of the at least one second uplink channel is associated with a resource or a resource group corresponding to the target first uplink channel.

In a possible implementation, the control-resource-set related higher-layer parameter includes CORESETPoolIndex, and the at least one second uplink channel and the target first uplink channel being both associated with the same control-resource-set related higher-layer parameter includes: the at least one second uplink channel and the target first uplink channel of the *M* first uplink channels are both associated with a value of the same control-resource-set related higher-layer parameter; or, DCI for scheduling the at least one second uplink channel and DCI for scheduling the target first uplink channel of the *M* first uplink channels are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a possible implementation, the determining, from the *N* second uplink channels, the at least one second uplink channel corresponding to the target first uplink channel of the *M* first uplink channels, and sending or dropping the at least one second uplink channel corresponding to the target first uplink channel of the *M* first uplink channels include: in a case where one or more first conditions are met, sending or dropping the at least one second uplink channel which is determined from the *N* second uplink channels and corresponds to the target first uplink channel of the *M* first uplink channels;
where the first conditions include: determining, from the *N* second uplink channels, at least one second uplink channel which has a same index or state of a transmission configuration indication as the target first uplink channel; or, determining, from the *N* second uplink channels, at least one second uplink channel which is associated with a same control-resource-set related higher-layer parameter as the target first uplink channel; or, determining, from the *N* second uplink channels, at least one second uplink channel of which a frequency domain resource overlaps with a frequency domain resource of the target first uplink channel; or, determining, from the *N* second uplink channels, at least one second uplink channel which is indicated by same DCI as the target first uplink channel; or, determining, from the *N* second uplink channels, at least one second uplink channel of which an index of an RB meets a second condition; or, determining, from the *N* second uplink channels, at least one second uplink channel of which a resource is associated with a resource or a resource group corresponding to the target first uplink channel.

In a possible implementation, the control-resource-set related higher-layer parameter includes CORESETPoolIndex, and the determining, from the *N* second uplink channels, the at least one second uplink channel which is associated with the same control-resource-set related higher-layer parameter as the target first uplink channel includes: determining, from the *N* second uplink channels, at least one second uplink channel which is associated with a value of the same control-resource-set related higher-layer parameter as the target first uplink channel; or, determining, from the *N* second uplink channels, at least one second uplink channel, where DCI for scheduling the at least one second uplink channel and DCI for scheduling the target first uplink channel are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a third aspect, the present application provides a communication apparatus, including a processor, a transceiver and a memory;
the memory is configured to store a computer program;
the transceiver is configured to send and receive information under control of the processor;
the processor is configured to read the computer program in the memory and perform the following steps:
   if *M* first uplink channels and *N* second uplink channels are to be sent on a first time domain resource, determining to multiplex UCI corresponding to a target first uplink channel of the M first uplink channels to at least one second uplink channel of the N second uplink channels for transmission, and sending the at least one second uplink channel carrying the UCI; or,
   if *M* first uplink channels and *N* second uplink channels are to be sent on a first time domain resource, dropping at least one second uplink channel of the *N* second uplink channels, and/or, sending a target first uplink channel of the *M* first uplink channels which corresponds to the at least one second uplink channel; or,
   if *M* first uplink channels and *N* second uplink channels are to be sent on a first time domain resource, determining, from the *N* second uplink channels, at least one second uplink channel corresponding to a target first uplink channel of the *M* first uplink channels, and sending or dropping the at least one second uplink channel corresponding to the target first uplink channel of the *M* first uplink channels;
   where *M* and *N* are not 1 simultaneously, and both *M* and *N* are integers greater than or equal to 1.

In a possible implementation, the at least one second uplink channel and the target first uplink channel have same information on a transmission parameter and/or same information on a physical resource, and the transmission parameter is a higher-layer parameter corresponding to transmission of an uplink channel.

In a possible implementation, the processor is specifically configured to: in a case where one or more first conditions are met, multiplex the UCI corresponding to the target first uplink channel of the *M* first uplink channels to the at least one second uplink channel of the *N* second uplink channels for transmission;
where the first conditions include: the at least one second uplink channel and the target first uplink channel have a same index or state of a transmission configuration indication; or, the at least one second uplink channel and the target first uplink channel are both associated with a same control-resource-set related higher-layer parameter; or, there is an overlap between a frequency domain resource of the at least one second uplink channel and a frequency domain resource of the target first uplink channel; or, the at least one second uplink channel and the target first uplink channel are both indicated by same DCI; or, an index of an RB of the at least one second uplink channel meets a second condition; or, a resource of the at least one second uplink channel is associated with a resource or a resource group corresponding to the target first uplink channel.

In a possible implementation, the control-resource-set related higher-layer parameter includes CORESETPoolIndex, and the at least one second uplink channel and the target first uplink channel being both associated with the same control-resource-set related higher-layer parameter includes: the at least one second uplink channel and the target first uplink channel are both associated with a value of the same control-resource-set related higher-layer parameter; or, DCI for scheduling the at least one second uplink channel and DCI for scheduling the target first uplink channel are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a possible implementation, at least two first uplink channels of the *M* first uplink channels carry same information; and/or, at least two second uplink channels of the *N* second uplink channels carry same information.

In a possible implementation, the target first uplink channel is the *M* first uplink channels; the processor is further configured to: determine to multiplex UCI corresponding to each of the *M* first uplink channels to the at least one second uplink channel of the *N* second uplink channels for transmission.

In a possible implementation, the processor is further configured to: simultaneously or sequentially determine to multiplex the UCI corresponding to each of the *M* first uplink channels to the at least one second uplink channel of the *N* second uplink channels for transmission.

In a possible implementation, at least one second uplink channel corresponding to one of any two first uplink channels of the *M* first uplink channels is same as or different from at least one second uplink channel corresponding to the other of the any two first uplink channels of the *M* first uplink channels.

In a possible implementation, the processor is further configured to: after determining to multiplex the UCI corresponding to the target first uplink channel of the *M* first uplink channels to the at least one second uplink channel of the *N* second uplink channels for transmission, delete or update first information, where the first information includes a serial number of the at least one second uplink channel.

In a possible implementation, the processor is further configured to: determine that the at least one second uplink channel has an ability to carry the UCI; and/or determine that a time difference between an instant at which the at least one second uplink channel is sent and an instant at which the target first uplink channel is sent is less than or equal to a first time difference.

In a possible implementation, the processor is specifically configured to: in a case where one or more first conditions are met, drop the at least one second uplink channel of the *N* second uplink channels;
where the first conditions include: the at least one second uplink channel and the target first uplink channel have a same index or state of a transmission configuration indication; or, the at least one second uplink channel and the target first uplink channel are both associated with a same control-resource-set related higher-layer parameter; or, there is an overlap between a frequency domain resource of the at least one second uplink channel and a frequency domain resource of the target first uplink channel; or, the at least one second uplink channel and the target first uplink channel are both indicated by same DCI; or, an index of an RB of the at least one second uplink channel meets a second condition; or, a resource of the at least one second uplink channel is associated with a resource or a resource group corresponding to the target first uplink channel.

In a possible implementation, the control-resource-set related higher-layer parameter includes CORESETPoolIndex, and the at least one second uplink channel and the target first uplink channel of the *M* first uplink channels being both associated with the same control-resource-set related higher-layer parameter includes: the at least one second uplink channel and the target first uplink channel of the *M* first uplink channels are both associated with a value of the same control-resource-set related higher-layer parameter; or, DCI for scheduling the at least one second uplink channel and DCI for scheduling the target first uplink channel of the *M* first uplink channels are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a possible implementation, at least two first uplink channels of the *M* first uplink channels carry same information; and/or, at least two second uplink channels of the *N* second uplink channels carry same information.

In a possible implementation, at least one second uplink channel corresponding to one of any two first uplink channels of the *M* first uplink channels is same as or different from at least one second uplink channel corresponding to the other of the any two first uplink channels of the *M* first uplink channels.

In a possible implementation, the processor is specifically configured to: in a case where one or more first conditions are met, send or drop the at least one second uplink channel which is determined from the *N* second uplink channels and corresponds to the target first uplink channel of the *M* first uplink channels;
where the first conditions include: determining, from the *N* second uplink channels, at least one second uplink channel which has a same index or state of a transmission configuration indication as the target first uplink channel; or, determining, from the *N* second uplink channels, at least one second uplink channel which is associated with a same control-resource-set related higher-layer parameter as the target first uplink channel; or, determining, from the *N* second uplink channels, at least one second uplink channel of which a frequency domain resource overlaps with a frequency domain resource of the target first uplink channel; or, determining, from the *N* second uplink channels, at least one second uplink channel which is indicated by same DCI as the target first uplink channel; or, determining, from the *N* second uplink channels, at least one second uplink channel of which an index of an RB meets a second condition; or, determining, from the *N* second uplink channels, at least one second uplink channel of which a resource is associated with a resource or a resource group corresponding to the target first uplink channel.

In a possible implementation, the control-resource-set related higher-layer parameter includes CORESETPoolIndex, and the determining, from the *N* second uplink channels, the at least one second uplink channel which is associated with the same control-resource-set related higher-layer parameter as the target first uplink channel includes: determining, from the N second uplink channels, at least one second uplink channel which is associated with a value of the same control-resource-set related higher-layer parameter as the target first uplink channel; or, determining, from the *N* second uplink channels, at least one second uplink channel, where DCI for scheduling the at least one second uplink channel and DCI for scheduling the target first uplink channel are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a possible implementation, at least two first uplink channels of the *M* first uplink channels carry same information; and/or, at least two second uplink channels of the *N* second uplink channels carry same information.

In a possible implementation, at least one second uplink channel corresponding to one of any two first uplink channels of the *M* first uplink channels is same as or different from at least one second uplink channel corresponding to the other of the any two first uplink channels of the *M* first uplink channels.

In a possible implementation, the UCI corresponding to the target first uplink channel includes a hybrid automatic repeat request, channel state information, or a positive scheduling request.

In a possible implementation, the first uplink channels are physical uplink control channels; the second uplink channels are physical uplink shared channels.

In a fourth aspect, the present application provides a communication apparatus, including a processor, a transceiver and a memory;
the memory is configured to store a computer program;
the transceiver is configured to send and receive information under control of the processor;
the processor is configured to read the computer program in the memory and perform the following steps:
   if a first communication apparatus is to send *M* first uplink channels and *N* second uplink channels on a first time domain resource: receiving at least one second uplink channel on the first time domain resource, where the at least one second uplink channel is used to carry DCI; demodulating the at least one second uplink channel to obtain at least one piece of UCI, where information included in each of the at least one piece of UCI is same, or, information included in each of the at least one piece of UCI is different; or,
   if a first communication apparatus is to send *M* first uplink channels and *N* second uplink channels on a first time domain resource, and the first communication apparatus drops at least one second uplink channel of the *N* second uplink channels, and/or, sends a target first uplink channel of the *M* first uplink channels which corresponds to the at least one second uplink channel: receiving, within the first time domain resource, the target first uplink channel corresponding to the at least one second uplink channel, and demodulating the target first uplink channel to obtain DCI; or,
   if a first communication apparatus is to send *M* first uplink channels and *N* second uplink channels on a first time domain resource, and the first communication apparatus determines at least one second uplink channel corresponding to a target first uplink channel of the *M* first uplink channels from the *N* second uplink channels, and sends or drops the at least one second uplink channel corresponding to the target first uplink channel of the *M* first uplink channels: receiving the at least one second uplink channel within the first time domain resource;
   where *M* and *N* are not 1 simultaneously, and both *M* and *N* are integers greater than or equal to 1.

In a possible implementation, the at least one second uplink channel and the target first uplink channel have same information on a transmission parameter and/or same information on a physical resource, and the transmission parameter is a higher-layer parameter corresponding to transmission of an uplink channel.

In a possible implementation, the at least one second uplink channel meets a first condition, and the first condition includes: the at least one second uplink channel and the target first uplink channel have a same index or state of a transmission configuration indication; or, the at least one second uplink channel and the target first uplink channel are both associated with a same control-resource-set related higher-layer parameter; or, there is an overlap between a frequency domain resource of the at least one second uplink channel and a frequency domain resource of the target first uplink channel; or, the at least one second uplink channel and the target first uplink channel are both indicated by same DCI; or, an index of an RB of the at least one second uplink channel meets a second condition; or, a resource of the at least one second uplink channel is associated with a resource or a resource group corresponding to the target first uplink channel.

In a possible implementation, the control-resource-set related higher-layer parameter includes CORESETPoolIndex, and the at least one second uplink channel and the target first uplink channel being both associated with the same control-resource-set related higher-layer parameter includes: the at least one second uplink channel and the target first uplink channel are both associated with a value of the same control-resource-set related higher-layer parameter; or, DCI for scheduling the at least one second uplink channel and DCI for scheduling the target first uplink channel are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a possible implementation, the processor is further configured to: simultaneously or sequentially receive the at least one second uplink channel.

In a possible implementation, the processor is further configured to: when sequentially receiving the at least one second uplink channel, delete or update first information, where the first information includes a serial number of the at least one second uplink channel.

In a possible implementation, the processor is further configured to: determine that the at least one second uplink channel has an ability to carry the UCI; and/or determine that a time difference between an instant at which the at least one second uplink channel is sent and an instant at which the target first uplink channel is sent is less than or equal to a first time difference.

In a possible implementation, the dropping the at least one second uplink channel of the *N* second uplink channels includes: in a case where one or more first conditions are met, dropping the at least one second uplink channel of the *N* second uplink channels;
where the first conditions include: the at least one second uplink channel and the target first uplink channel have a same index or state of a transmission configuration indication; or, the at least one second uplink channel and the target first uplink channel are both associated with a same control-resource-set related higher-layer parameter; or, there is an overlap between a frequency domain resource of the at least one second uplink channel and a frequency domain resource of the target first uplink channel; or, the at least one second uplink channel and the target first uplink channel are both indicated by same DCI; or, an index of an RB of the at least one second uplink channel meets a second condition; or, a resource of the at least one second uplink channel is associated with a resource or a resource group corresponding to the target first uplink channel.

In a possible implementation, the control-resource-set related higher-layer parameter includes CORESETPoolIndex, and the at least one second uplink channel and the target first uplink channel being both associated with the same control-resource-set related higher-layer parameter includes: the at least one second uplink channel and the target first uplink channel are both associated with a value of the same control-resource-set related higher-layer parameter; or, DCI for scheduling the at least one second uplink channel and DCI for scheduling the target first uplink channel of the *M* first uplink channels are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a possible implementation, the determining, from the *N* second uplink channels, the at least one second uplink channel corresponding to the target first uplink channel of the *M* first uplink channels, and sending or dropping the at least one second uplink channel corresponding to the target first uplink channel of the *M* first uplink channels include: in a case where one or more first conditions are met, sending or dropping the at least one second uplink channel which is determined from the *N* second uplink channels and corresponds to the target first uplink channel of the *M* first uplink channels;
where the first conditions include: determining, from the *N* second uplink channels, at least one second uplink channel which has a same index or state of a transmission configuration indication as the target first uplink channel; or, determining, from the *N* second uplink channels, at least one second uplink channel which is associated with a same control-resource-set related higher-layer parameter as the target first uplink channel; or, determining, from the *N* second uplink channels, at least one second uplink channel of which a frequency domain resource overlaps with a frequency domain resource of the target first uplink channel; or, determining, from the *N* second uplink channels, at least one second uplink channel which is indicated by same DCI as the target first uplink channel; or, determining, from the *N* second uplink channels, at least one second uplink channel of which an index of an RB meets a second condition; or, determining, from the *N* second uplink channels, at least one second uplink channel of which a resource is associated with a resource or a resource group corresponding to the target first uplink channel.

In a possible implementation, the control-resource-set related higher-layer parameter includes CORESETPoolIndex, and the determining, from the *N* second uplink channels, the at least one second uplink channel which is associated with the same control-resource-set related higher-layer parameter as the target first uplink channel includes: determining, from the *N* second uplink channels, at least one second uplink channel which is associated with a value of the same control-resource-set related higher-layer parameter as the target first uplink channel; or, determining, from the *N* second uplink channels, at least one second uplink channel, where DCI for scheduling the at least one second uplink channel and DCI for scheduling the target first uplink channel are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a fifth aspect, the present application provides a communication apparatus, including:
a transceiving unit, configured to: send the at least one second uplink channel carrying DCI; or, send a target first uplink channel of the *M* first uplink channels which corresponds to the at least one second uplink channel; or, send at least one second uplink channel corresponding to a target first uplink channel of the *M* first uplink channels;
a processing unit, configured to: if *M* first uplink channels and *N* second uplink channels are to be sent on a first time domain resource, determine to multiplex UCI corresponding to a target first uplink channel of the *M* first uplink channels to at least one second uplink channel of the *N* second uplink channels for transmission; or if *M* first uplink channels and *N* second uplink channels are to be sent on a first time domain resource, drop at least one second uplink channel of the *N* second uplink channels, or, a target first uplink channel of the uplink channels which corresponds to the at least one second uplink channel; or if *M* first uplink channels and *N* second uplink channels are to be sent on a first time domain resource, determine, from the *N* second uplink channels, at least one second uplink channel corresponding to a target first uplink channel of the *M* first uplink channels, and drop the at least one second uplink channel corresponding to the target first uplink channel of the *M* first uplink channels;
where *M* and *N* are not 1 simultaneously, and both *M* and *N* are integers greater than or equal to 1.

In a sixth aspect, the present application provides a communication apparatus, including:
a transceiving unit, configured to: receive at least one second uplink channel on a first time domain resource, where the at least one second uplink channel is used to carry DCI; or, receive a target first uplink channel corresponding to the at least one second uplink channel within a first time domain resource; or, receive at least one second uplink channel within a first time domain resource;
a processing unit, configured to: demodulate the at least one second uplink channel to obtain at least one piece of UCI, where information included in each of the at least one piece of UCI is same, or, information included in each of the at least one piece of UCI is different; or, demodulate the target first uplink channel to obtain UCI;
where *M* and *N* are not 1 simultaneously, and both *M* and *N* are integers greater than or equal to 1.

In a seventh aspect, an embodiment of the present application provides a communication system, where the communication system includes the communication apparatus described in the third aspect and the communication apparatus described in the fourth aspect.

In an eighth aspect, an embodiment of the present application provides a communication system, where the communication system includes the communication apparatus described in the fifth aspect and the communication apparatus described in the sixth aspect.

In a ninth aspect, the present application provides a computer program product including instructions, where when the instructions are executed on a computer, any of the communication methods in the first or second aspect above is implemented.

In a tenth aspect, the present application provides a computer storage medium, where the computer storage medium stores computer executable instructions, and the computer executable instructions are used to cause the computer to execute and implement any of the communication methods in the first or second aspect above.

For beneficial effects of the second to tenth aspects, reference may be made to the content discussed in the first aspect above, and details are not repeatedly enumerated here.

### BRIEF DESCRIPTION OF DRAWINGS

FIG. 1 is a diagram of an application scenario applicable to embodiments of the present application.
FIG. 2 is a schematic flow chart of a communication method provided by an embodiment of the present application.
FIG. 3 to FIG. 6 are several schematic diagrams of determining at least one second uplink channel provided by embodiments of the present application.
FIG. 7 to FIG. 13 are several schematic diagrams of determining a second uplink channel for carrying UCI provided by embodiments of the present application.
FIG. 14 is a schematic flow chart of another communication method provided by an embodiment of the present application.
FIG. 15 to FIG. 18 are schematic structural diagrams of several communication apparatuses provided by embodiments of the present application.

### DESCRIPTION OF EMBODIMENTS

In order to better understand the technical solutions provided by the present application, the description will be given in more detail in the following in conjunction with the drawings of the specification and specific implementations.

For ease of understanding, technical terms involved in embodiments of the present application are introduced below.
1. Terminal device, which can also be referred to as a terminal, may be a wireless terminal or a wired terminal. A wireless terminal may be a device that provides voice and/or other service data connectivity to a user, or a handheld device with a wireless connection function, or other processing devices connected to a wireless modem. The wireless terminal may communicate with one or more core networks via a radio access network (Radio Access Network, RAN). The wireless terminal may be a mobile terminal, such as a mobile phone (or a "cellular" phone) and a computer equipped with a mobile terminal, for example, a portable, pocket-sized, handheld, computer-built-in, or vehicle-mounted mobile device that exchanges voice and/or data with a radio access network. For example, the wireless terminal may be a personal communication service (Personal Communication Service, PCS) phone, a cordless phone, a session initiation protocol (Session Initiation Protocol, SIP) phone, a wireless local loop (Wireless Local Loop, WLL) station, a personal digital assistant (Personal Digital Assistant, PDA), and other devices. The wireless terminal may also be called a system, a subscriber unit (subscriber unit), a subscriber station (subscriber station), a mobile station (mobile station), a mobile (mobile), a remote station (remote station), a remote terminal (remote terminal), an access terminal (access terminal), a user terminal (user terminal), a user agent (user agent) and a user device or user equipment (user device or user equipment), a satellite phone, etc.
2. Network device. A network device is, for example, an access network device (or a network element), and an access network device is, for example, a base station. The base station in embodiments of the present application is, for example, a base station in a 5th generation (5th generation, 5G) communication system, a wireless controller in a cloud radio access network (Cloud Radio Access Network, CRAN) scenario, a relay station, an access point, a vehicle-mounted device, a wearable device, a network device in a future 5G network, or a base station in a future evolved public land mobile network (Public Land Mobile Network, PLMN), etc.

"At least one" in embodiments of the present application refers to one or more. "Multiple" in embodiments of the present application refers to two or more. "A and/or B" in embodiments of the present application includes three cases: A; B; A and B.

In order to provide a mechanism for transmitting UCI, an embodiment of the present application provides a communication method. In this method, in a case where a first communication apparatus is to send at least one first uplink channel (such as PUCCH) and at least one second uplink channel (such as PUSCH) within a time domain resource, the first communication apparatus may determine, from the at least one second uplink channel, at least one second uplink channel corresponding to one first uplink channel of the at least one first uplink channel, and multiplex UCI to be carried on the one first uplink channel to the at least one second uplink channel, which provides a mechanism for transmitting UCI. Moreover, in this case, the first communication apparatus does not need to transmit the one first uplink channel, but only needs to transmit the at least one second uplink channel. In a case where the first communication apparatus successfully sends the UCI, transmission amount of the first communication apparatus can also be reduced.

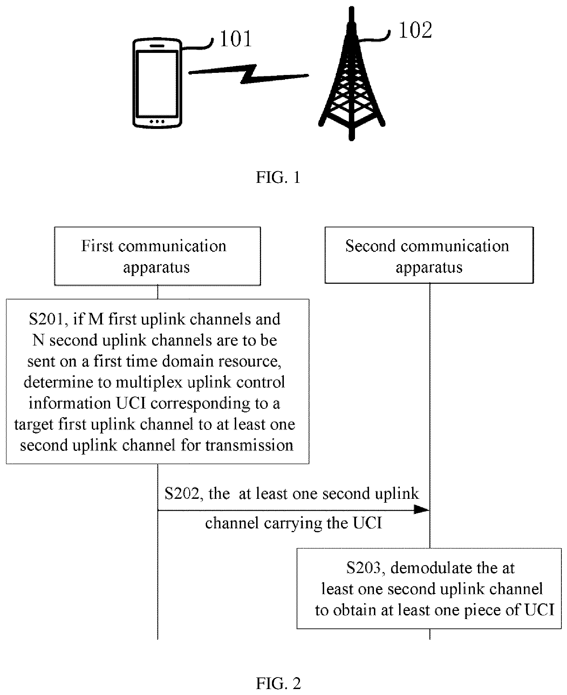

Please refer to FIG. 1, which is a schematic diagram of an application scenario applicable to the embodiments of the present application, and can also be understood as a schematic diagram of an architecture of a communication system.

As shown in FIG. 1, the application scenario includes a first communication apparatus 101 and a second communication apparatus 102. The first communication apparatus 101 and the second communication apparatus 102 can communicate with each other. The first communication apparatus 101 is, for example, a terminal device, and the second communication apparatus 102 is, for example, a network device. For the implementations of the terminal device and the network device, reference may be made to the above text and details will not be repeated here.

Exemplarily, the first communication apparatus 101 may send information to the second communication apparatus 102 via an uplink channel. In other words, the first communication apparatus 101 may send (or transmit) an uplink channel to the second communication apparatus 102, and the uplink channel includes (or carries) information. The uplink channel is, for example, a PUCCH, a PUSCH, a physical sidelink shared channel (Physical Sidelink Shared Channel, PSSCH), a physical sidelink control channel (Physical Sidelink Control Channel, PSCCH) or a physical random access channel (Physical Random Access Channel, PRACH).

The second communication apparatus 102 may also send information to the first communication apparatus 101 via a downlink channel. In other words, the second communication apparatus 102 may send (or transmit) a downlink channel to the first communication apparatus 101, and the downlink channel includes (or carries) information. The downlink channel is, for example, a physical downlink control channel (Physical Downlink Control Channel, PDCCH), a physical downlink shared channel (Physical Downlink Shared Channel, PDSCH) or a physical broadcast channel (Physical Broadcast Channel, PBCH).

In a possible implementation, the first communication apparatus 101 may include multiple antenna panels (panel), and the second communication apparatus 102 may include multiple transmission points (Transmit and Receive Points, TRPs). In this case, the second communication apparatus 102 may schedule, by means of S-DCI or M-DCI, the multiple panels of the first communication apparatus 101 to perform simultaneous transmission of the first uplink channel and/or the second uplink channel.

Specifically, in a case where the second communication apparatus 102 schedules the first communication apparatus 101 by means of S-DCI, a manner in which the first communication apparatus 101 transmits the first uplink channel and/or the second uplink channel includes space division multiplexing (Space Division Multiplexing, SDM) (including a single frequency network (Single Frequency Network, SFN)) or frequency division multiplexing (Frequency Division Multiplexing, FDM). Moreover, in this case, the first communication apparatus may support simultaneous transmission and/or repeated transmission of the first uplink channels, and/or support simultaneous transmission and/or repeated transmission of the second uplink channels.

Optionally, in the case where the second communication apparatus 102 schedules the first communication apparatus 101 by means of S-DCI, it may be applicable to a scenario of ideal backhaul (backhaul). The ideal backhaul is, for example, that the first uplink channel and the second uplink channel are both located in a same service cell.

In a case where the second communication apparatus 102 schedules the first communication apparatus 101 by means of M-DCI, the second communication apparatus 102 independently schedules multiple panels in the first communication apparatus 101 through multiple transmission points to perform transmission of the first uplink channels and/or the second uplink channels. The first uplink channels or the second uplink channels sent by multiple panels in the first communication apparatus may carry different data or information.

In the case where the second communication apparatus 102 schedules the first communication apparatus 101 by means of M-DCI, it may be applicable to a scenario of non-ideal backhaul.

It should be noted that repeated transmission of the first uplink channel may be understood as the first communication apparatus 101 simultaneously transmitting multiple first uplink channels at a single granularity of time slot resource (such as a single time slot or a single symbol), and any two of the multiple first uplink channels are identical. The two identical first uplink channels may be understood as information carried by the two first uplink channels being the same, for example, the two first uplink channels being both used to carry same UCI. Transmitting multiple first uplink channels by the first communication apparatus repeatedly may also be referred to as repeated transmission of the first uplink channel, or as repeatedly transmitting the first uplink channel.

Simultaneous transmission of the first uplink channels may be understood as the first communication apparatus 101 simultaneously transmitting multiple first uplink channels at a single granularity of time slot resource, and any two of the multiple first uplink channels are identical or different. For example, any two first uplink channels are independently scheduled by different transmission points (such as in an M-DCI-based scheduling framework) to transmit different UCI information. Any two first uplink channels being different may be understood as any two first uplink channels being used to carry different UCI. Transmitting multiple first uplink channels by the first communication apparatus simultaneously may also be referred to as simultaneous transmission of the first uplink channels, or simultaneously transmitting the first uplink channels.

Repeated transmission of the second uplink channels may be understood as the first communication apparatus 101 simultaneously transmitting multiple second uplink channels at a single granularity of time slot resource, and any two second uplink channels of the multiple second uplink channels are identical. Any two second uplink channels being identical may also be understood as the two second uplink channels being used to carry same information. For example, the two second uplink channels carry same uplink data before yet UCI is multiplexed; or after UCI is multiplexed, the two second uplink channels carry same data and same UCI. Repeated transmission of multiple second uplink channels by the first communication apparatus may also be referred to as repeated transmission of the second uplink channels, or as repeatedly transmitting the second uplink channels.

Simultaneous transmission of the second uplink channels can be understood as the first communication apparatus 101 simultaneously transmitting multiple second uplink channels at a single granularity of time slot resource, and any two second uplink channels of the multiple second uplink channels are identical or different. Any two second uplink channels being different can also be understood as any two second uplink channels being used to carry different uplink data; or after UCI is multiplexed, the two second uplink channels carry different UCI. Simultaneous transmission of multiple second uplink channels by the first communication apparatus may also be referred to as simultaneous transmission of the second uplink channels, or as simultaneously transmitting the second uplink channels.

The communication method in embodiments of the present application may be applicable to the communication system shown in FIG. 1. The communication system shown in FIG. 1 may be a 5th-generation communication system, or a next-generation communication system in a future evolution process, etc., which is not limited in embodiments of the present application.

The communication method in embodiments of the present application is introduced below in conjunction with the accompanying drawings.

Please refer to FIG. 2, which is a schematic flow chart of a communication method provided in an embodiment of the present application. A first communication apparatus involved in the embodiment of FIG. 2 is, for example, the first communication apparatus 101 shown in FIG. 1, and a second communication apparatus involved is, for example, the second communication apparatus 102 shown in FIG. 1.

S201, if the first communication apparatus is to send M first uplink channels and N second uplink channels on a first time domain resource, the first communication apparatus determines to multiplex UCI corresponding to a target first uplink channel to at least one second uplink channel for transmission, where *M* and *N* are not 1 simultaneously, and both *M* and *N* are integers greater than or equal to 1.

The granularity of the first time domain resource is a time slot, a sub-slot (sub-slot), a mini-slot (mini-slot) or a symbol, etc. The first uplink channel and the second uplink channel in the embodiments of the present application are two different types of uplink channels. For example, the first uplink channel is a PUCCH, and the second uplink channel is a PUSCH. For another example, the first uplink channel is a PRACH, and the second uplink channel is a PUSCH. For yet another example, the first uplink channel is a PUSCH, and the second uplink channel is a PUCCH. For yet another example, the first uplink channel is a PSSCH, and the second uplink channel is a PSCCH. For yet another example, the first uplink channel is a PSCCH, and the second uplink channel is a PSSCH.

The first uplink channel in the embodiments of the present application may be understood as a resource for the first uplink channel, such as a transmission opportunity of the first uplink channel, repeated transmission of the first uplink channel, a frequency domain part of the first uplink channel, or a data stream group (layer group) of the first uplink channel. The second uplink channel in the embodiments of the present application may be understood as a resource for the second uplink channel, such as the first second uplink channel. With the second uplink channel being a PUSCH as an example, a resource of the PUSCH is a first PUSCH. The first PUSCH may be an N-th transmission opportunity, an *N*-th frequency domain resource part, an *N*-th layer group, an *N*-th repeated transmission, a PUSCH scheduled by a PDCCH within a control resource set (COntrol REsource SET, CORESET) with a value of CORESETPoolIndex (CORESETPoolIndex) being *N,* etc. Each of the first uplink channels in the embodiments of the present application may be replaced by a resource of the first uplink channel, and each of the second uplink channels may be replaced by a resource of the second uplink channel.

For example, when a transmission mode of the first communication apparatus is SDM, with the second uplink channel being a PUSCH as an example, under SDM, the PUSCH in the embodiments of the present application may be regarded as a PUSCH layer group.

The UCI in the embodiments of the present application includes a hybrid automatic repeat request-ACKnowledgement (Hybrid Automatic Repeat reQuest ACKnowledgement, HARQ-ACK) and/or channel state information (Channel State Information, CSI). The UCI corresponding to the target first uplink channel in the embodiments of the present application may be understood as UCI to be carried on (or included in) the target first uplink channel, or UCI that should be carried on the target first uplink channel.

In cases where *M* and *N* take different values, the at least one second uplink channel which is determined by the first communication apparatus and to which the UCI corresponding to the target first uplink channel is multiplexed may be different, and the following explains the respective cases. For the convenience of description, in the embodiments of the present application, the at least one second uplink channel to which the UCI corresponding to the target first uplink channel is multiplexed is referred to as the at least one second uplink channel corresponding to the target first uplink channel.

In a first case, *M* is equal to 1, and *N* is greater than or equal to 2, that is, the first communication apparatus is to send one first uplink channel and multiple second uplink channels on one first time domain resource.

In the first case, the target first uplink channel is the one first uplink channel. In this case, there may be many modes, which are described below, for the first communication apparatus to determine, from the *N* second uplink channels, at least one second uplink channel (for the sake of convenience, the at least one second uplink channel is referred to as *P* second uplink channels below) for carrying the UCI corresponding to the target first uplink channel. *P* is an integer greater than or equal to 1 and less than or equal to N.

In the first case, transmission of the first uplink channel may be single transmission, and transmission of the *N* second uplink channels may be simultaneous or repeated transmission. Single transmission may also be understood as transmitting an uplink channel at a single granularity of time slot resource. In addition, when the first communication apparatus uses time division multiplexing (Time-Division Multiplexing, TDM) to transmit the first uplink channel, even if the first communication apparatus transmits multiple first uplink channels repeatedly at a single granularity of time slot resource, the transmission of the first uplink channel at the single granularity of time slot resource may also be regarded as single transmission.

In the first case, transmission of some or all of the *N* second uplink channels may be simultaneous transmission.

In the first case, transmission of some or all of the *N* second uplink channels may be repeated transmission.

As an example, regardless of whether the first communication apparatus uses FDM or SDM for transmission, transmission of some or all of the *N* second uplink channels may be simultaneous transmission or repeated transmission.

Example 1: the first communication apparatus determines the *N* second uplink channels as the *P* second uplink channels. This is equivalent to the first communication apparatus multiplexing the UCI to the N second uplink channels, that is, multiplexing the UCI to all the second uplink channels.

For example, the first communication apparatus may make each of the *N* second uplink channels carry the UCI.

When the first communication apparatus has an ability to repeatedly transmit a second uplink channel, the first communication apparatus may transmit one piece of UCI on multiple second uplink channels. This is equivalent to the first communication apparatus repeatedly transmitting the UCI, so that after the second communication apparatus receives the *N* second uplink channels, the second communication apparatus may jointly demodulate (or jointly decode) the multiple second uplink channels.

Or, for example, the first communication apparatus splits the UCI into multiple parts, and the first communication apparatus makes *N1* second uplink channels of the *N* second uplink channels carry one of the multiple parts. In other words, each of the *N* second uplink channels carries a part of the UCI, and *N1* is a positive integer greater than or equal to 1 and less than or equal to *N.* The two parts of the UCI carried in any two second uplink channels may be the same or different.

In Example 1, the first communication apparatus may use multiple second uplink channels to carry one piece of UCI. Even if a transmission failure occurs to one second uplink channel, a receiving end (such as the second communication apparatus) may also use other second uplink channels to decode the UCI, thus facilitating improvement of the reliability of UCI transmission.

In a possible implementation, under S-DCI scheduling, the *N* second uplink channels, or referred to as *N* second-uplink-channel transmission opportunities, *N* second-uplink-channel repetition versions, or *N* second-uplink-channel layer groups, are all scheduled by one piece of DCI. In this scheduling mode, the first communication apparatus may multiplex the UCI corresponding to the target first uplink channel to any one second uplink channel of the *N* second uplink channels, or to multiple second uplink channels of the *N* second uplink channels.

Example 2: the first communication apparatus may determine the *P* second uplink channels according to transmission parameters. The transmission parameters are used to indicate transmission-related parameters, including one or more of an index of a transmission configuration indication (Transmission Configuration Indication, TCI), a state of a TCI, a control-resource-set related higher-layer parameter, or an index of an RB. The transmission parameters may be configured or sent by the second communication apparatus, or specified by a protocol. For example, the second communication apparatus configures the transmission parameters through higher-layer signaling.

Exemplarily, the first communication apparatus may determine, from the *N* second uplink channels, second uplink channels associated with a transmission parameter corresponding to the target first uplink channel as the *P* second uplink channels. The association may be that, for example, the transmission parameters are the same. The association may also be that the relative indexes of physical resources are the same. For example, the first target uplink channel has the lowest frequency domain (RB) index among all the first uplink channels, so the second uplink channels with the lowest frequency domain (RB) indexes among all the second uplink channels may be determined as the *P* second uplink channels.

Example 3: the first communication apparatus may determine the *P* second uplink channels according to physical resources. The physical resources include frequency domain resources, and may be configured or sent by the second communication apparatus, or specified by a protocol. For example, the second communication apparatus indicates the physical resources through DCI signaling.

Exemplarily, the first communication apparatus may determine, from the *N* second uplink channels, second uplink channels associated with a physical resource corresponding to the target first uplink channel as the *P* second uplink channels. The association may be that, for example, the physical resources are the same. The physical resources being the same may be understood as that the physical resource of the target first uplink channel completely or partially overlaps with the physical resource of a second uplink channel.

In a possible implementation, the first communication apparatus may also determine the at least one second uplink channel corresponding to the target first uplink channel according to transmission units, such as transmission points, beams, antennas, etc. Specifically, the first communication apparatus determines, from the *N* second uplink channels, second uplink channels that are located in the same transmission unit as the target first uplink channel as the *P* second uplink channels.

Example 4: the first communication apparatus determines the *P* second uplink channels according to the transmission parameters and the physical resources.

Exemplarily, the first communication apparatus may determine, from the *N* second uplink channels, second uplink channels associated with a transmission parameter corresponding to the target first uplink channel and also associated with a physical resource corresponding to the target first uplink channel as the *P* second uplink channels. For the meaning of the association, reference may be made to the previous text.

Example 5: the first communication apparatus may also receive first indication information from the second communication apparatus, and the first indication information is used to indicate at least one second uplink channel. Further, the first communication apparatus may directly determine the *P* second uplink channels corresponding to the target first uplink channel based on the first indication information.

For the modes in which the second communication apparatus determines the at least one second uplink channel, reference may be made to the content of the first communication apparatus determining the *P* second uplink channels in the previous text, and details are not repeatedly enumerated here.

In a second case, *M* is greater than or equal to 2, and *N* is equal to 1, that is, the first communication apparatus is to send multiple first uplink channels and one second uplink channel on the first time domain resource.

In the second case, the first communication apparatus may take some or all of the *M* first uplink channels as the target first uplink channel(s). Which first uplink channels that the first communication apparatus is to select as the target first uplink channels may be specified by a protocol, or determined by the first communication apparatus according to configuration by the second communication apparatus.

In the second case, transmission of the *M* first uplink channels may be simultaneous or repeated transmission, and transmission of the second uplink channel may be single transmission. For the specific meanings of simultaneous transmission, repeated transmission, and single transmission, reference may be made to the content discussed above, and details will not be repeated here.

In a third case, *M* is greater than or equal to 2, and *N* is greater than or equal to 2, that is, the first communication apparatus is to send multiple first uplink channels and multiple second uplink channels on the first time domain resource.

The first communication apparatus may take some or all of the *M* first uplink channels as the target first uplink channel(s).

In the third case, transmission of the *M* first uplink channels may be simultaneous or repeated transmission, and transmission of the *N* second uplink channels may be simultaneous or repeated transmission. For the specific meanings of simultaneous transmission and repeated transmission, reference may be made to the content discussed above, and details will not be repeated here.

The following describes the modes in which the first communication apparatus determines a second uplink channel for carrying UCI in cases where the number of target first uplink channels is different.

In a first sub-case of the third case, the number of target first uplink channels is 1.

In this case, the first communication apparatus only needs to determine at least one second uplink channel for carrying UCI corresponding to one target first uplink channel. For the determination manner in this case, reference may be made to the content discussed in the first case above.

In a second sub-case of the third case, the number of target first uplink channels is more than one.

The following mode of determining at least one second uplink channel for carrying UCI corresponding to each of the more than one target first uplink channel may be the same. For the modes of determining the at least one second uplink channel for carrying the UCI corresponding to one target first uplink channel, reference may be made to the content discussed above, and details will not be repeated here.

In the second sub-case, at least one second uplink channel corresponding to one of any two target first uplink channels may be completely the same as, partially the same as, or completely different from at least one second uplink channel corresponding to the other of the any two target first uplink channels, which is not specifically limited in the embodiments of the present application.

As an example, there are at least two identical first uplink channels in the *M* first uplink channels in the second case and the third case. In these cases, the at least two identical first uplink channels may also be called two repeatedly-transmitted first uplink channels.

As another example, all the *M* first uplink channels in the second case and the third case may be different from one another. In these cases, the *M* first uplink channels may be regarded as *M* simultaneously-transmitted first uplink channels, which is not specifically limited in the embodiments of the present application.

As an example, similarly, in the *N* second uplink channels, there are at least two second uplink channels that transmit same data or information in the first case and the third case. In these cases, the at least two second uplink channels may also be referred to as two repeatedly-transmitted second uplink channels.

As another example, all the *N* second uplink channels in the first case and the third case may be different from one another. In these cases, the *N* second uplink channels may be regarded as *N* simultaneously-transmitted second uplink channels.

For the specific content of repeated transmission and simultaneous transmission, reference may be made to the previous text, and details will not be repeated here.

The first communication apparatus may determine to multiplex the UCI corresponding to the target first uplink channel to at least one second uplink channel corresponding to the target first uplink channel for transmission. Multiplexing may also be understood as transfer, or carrying, etc.

In addition, in the above three cases (the first case, the second case and the third case), the methods for the first communication apparatus to determine the at least one second uplink channel corresponding to the target first uplink channel may be configured by a protocol or configured by the second communication apparatus.

S202, the first communication apparatus sends the at least one second uplink channel carrying the UCI to the second communication apparatus. Correspondingly, the second communication apparatus receives the at least one second uplink channel carrying the UCI from the first communication apparatus.

The first communication apparatus may send the at least one second uplink channel carrying the UCI to the second communication apparatus.

In a possible implementation, the first communication apparatus may also drop the target first uplink channel and only send the second uplink channel. dropping may be understood as that the first communication apparatus does not need to send the target first uplink channel to the second communication apparatus.

S203, the second communication apparatus demodulates the at least one second uplink channel to obtain at least one piece of UCI.

As an example, the second communication apparatus determines the at least one second uplink channel corresponding to each target first uplink channel, and demodulates the at least one second uplink channel corresponding to the each target first uplink channel to obtain at least one piece of UCI. For the modes in which the second communication apparatus determines the at least one second uplink channel corresponding to each target first uplink channel, reference may correspondingly be made to the content discussed in the first, second and third cases above, and details will not be repeated here. The mode in which the second communication apparatus determines the at least one second uplink channel corresponding to each target first uplink channel may be configured by the first communication apparatus or by a protocol.

Within the first time domain resource, the second communication apparatus may determine that the first communication apparatus is to send *M* first uplink channels and *N* second uplink channels. Therefore, the second communication apparatus may determine, from the *N* second uplink channels, at least one second uplink channel corresponding to the target first uplink channel. For the modes in which the second communication apparatus determines the at least one second uplink channel, reference may be made to the content of the first communication apparatus determining the at least one second uplink channel above, and details are not repeatedly enumerated here.

As another example, the second communication apparatus may directly receive the at least one second uplink channel from the at least one second uplink channel sent on the first time domain resource, without a need for determining the at least one second uplink channel corresponding to the target first uplink channel from the *N* second uplink channels.

As another example, the first communication apparatus may send second indication information to the second communication apparatus, and the second indication information is used to indicate the at least one second uplink channel. In this way, the second communication apparatus does not need to determine the at least one second uplink channel separately.

In the cases where *M* and *N* take different values, the demodulation content of the second communication apparatus is also different, which is explained below accordingly.
1. For the first case above (that is, *M* is equal to 1, and *N* is greater than or equal to 2).

1-1. In the first case above, the UCI corresponding to the target first uplink channel is multiplexed to the *P* second uplink channels. The *P* second uplink channels respectively carry the UCI, and the UCI carried by the *P* second uplink channels is the same, that is, the same piece of UCI.

Correspondingly, the second communication apparatus may receive the *P* second uplink channels, and the second communication apparatus may jointly demodulate the *P* second uplink channels, that is, combine soft information in the *P* second uplink channels for demodulation, to obtain one piece of UCI, so that UCI with greater gain and higher accuracy (such as higher reliability) can be obtained. The soft information is, for example, a log likelihood ratio (Log Likelihood Ratio, LLR). Or, the second communication apparatus may demodulate the *P* second uplink channels respectively to obtain at least one piece of UCI, and the at least one piece of UCI is the same.

1-2. In the first case above, the UCI corresponding to the target first uplink channel is split into multiple parts, and each second uplink channel of the *P* second uplink channels carries one of the multiple parts.

Correspondingly, the second communication apparatus may receive the *P* second uplink channels, demodulate the *P* second uplink channels respectively to obtain multiple parts in total, and obtain the UCI based on the multiple parts (such as to cascade multiple parts of information). Or, the second communication apparatus jointly demodulates the *P* second uplink channels, that is, combines the soft information in the *P* second uplink channels for demodulation, to obtain the UCI corresponding to the target first uplink channel.

2. For the second case above (i.e., *M* is greater than or equal to 2, and *N* is greater than or equal to 1).

2-1. In the second case and the number of target first uplink channels is 1.

For the content of the second communication apparatus obtaining the at least one piece of UCI, reference may be made to the content discussed above, and details will not be repeated here.

2-2. In the second case and the number of target first uplink channels is more than one.

Multiple pieces of UCI corresponding to multiple target first uplink channels are multiplexed to one second uplink channel. Correspondingly, the second communication apparatus may receive the one second uplink channel. The second communication apparatus can demodulate the one second uplink channel to obtain multiple pieces of UCI in total.

If the multiple target first uplink channels are not repeatedly-transmitted channels, the multiple pieces of UCI are different. If at least two of the multiple target first uplink channels are repeatedly-transmitted channels, then the multiple pieces of UCI may include at least two identical pieces of UCI.

3. For the third case above (i.e., *M* is greater than or equal to 2, and *N* is greater than or equal to 2).

3-1. In the third case and the number of target first uplink channels is 1.

For the content of the second communication apparatus obtaining the at least one piece of UCI, reference may be made to the content discussed above, and details will not be repeated here.

3-2. In the third case, the number of target first uplink channels is more than one, and the UCI corresponding to each of the multiple target first uplink channels is multiplexed to at least one second uplink channel.

3-2-1. If at least two of the multiple target first uplink channels are repeatedly-transmitted channels, the UCI carried in the at least one second uplink channel corresponding to each of the at least two first uplink channels received by the second communication apparatus is also the same. The second communication apparatus may jointly demodulate the at least one second uplink channel corresponding to the at least two first uplink channels to obtain a total of one piece of UCI. For the content on the joint demodulation, reference may be made to the content discussed above, and details will not be repeated here.

For other first uplink channels except the at least two first uplink channels that are repeatedly-transmitted channels, the second communication apparatus may demodulate the second uplink channels corresponding to the other first uplink channels to obtain the UCI corresponding to the other first uplink channels.

3-2-2. If the multiple target first uplink channels are simultaneously-transmitted channels, there is no repeated transmission between the multiple target first uplink channels.

Accordingly, the second communication apparatus may demodulate the second uplink channel(s) corresponding to each target first uplink channel to obtain the UCI corresponding to the each target first uplink channel.

In the embodiments of the present application, in the case where the first uplink channels and the second uplink channels are to be sent within the first time domain resource, the first communication apparatus can multiplex the UCI to the second uplink channels for transmission, which provides a mechanism for the first communication apparatus to send UCI to the second communication apparatus. Since there is no need to transmit the first uplink channels and the second uplink channels on one time domain resource, the conflict problem in receiving the first uplink channels and the second uplink channels by the receiving end (the second communication apparatus) is avoided.

In the first case above (i.e., *M* is equal to 1, and *N* is greater than or equal to 2), and in a case of using Example 3 (i.e., determining the at least one second uplink channel according to the transmission parameters), for different content of the transmission parameters, the modes in which the first communication apparatus determines the at least one second uplink channel corresponding to the target first uplink channel are also different, which is explained in detail below.

Mode 1: the transmission parameter is an index of a TCI.

The first communication apparatus determines, from the *N* second uplink channels, second uplink channels which have the same index of the TCI as the target first uplink channel, as the *P* second uplink channels. The index of the TCI is, for example, 001 or 101, etc.

The index of the TCI for the first uplink channel may be used to indicate a beam for sending the first uplink channel, and the index of the TCI for the second uplink channel may be used to indicate a beam for sending the second uplink channel.

Specifically, the first communication apparatus may determine the index of the TCI corresponding to the target first uplink channel. In order to simplify the description, the index of the TCI corresponding to the target first uplink channel in the embodiments of the present application is referred to as a first index. The first communication apparatus may determine, from the *N* second uplink channels, the second uplink channels with the index of the TCI being the first index as the *P* second uplink channels.

Mode 2: the transmission parameter is a relative index of a TCI state.

The first communication apparatus determines, from the N second uplink channels, second uplink channels which have a relative index of a TCI state same as a relative index of a TCI state for the target first uplink channel or same as an indicated relative index of a TCI state, as the P second uplink channels.

The TCI state refers to a TCI state indicated by the second communication apparatus through medium access control-control element (Medium Access Control-Control Element, MAC-CE) signaling or DCI signaling. For example, the second communication apparatus indicates *T1* code points through MAC-CE signaling or DCI signaling, and each code point contains *T2* TCI states, to indicate TCI states of multiple physical channels respectively. For example, the second communication apparatus may simultaneously or separately indicate TCI states of the *N* second uplink channels and the first uplink channel. For example, a relative index of the first TCI state in the *T2* TCI states indicated by a TCI code point or an indicated relative index is 1, a relative index of a second TCI state or an indicated relative index is 2, and so on, and a relative index of a *T2*-th (last) TCI state or an indicated relative index is *T2.* The first communication apparatus determines, from the *N* second uplink channels, the second uplink channels which have the same TCI state or the same relative index of the TCI state as the target first uplink channel or have the relative index of the TCI state same as the indicated relative index of the TCI state, as the *P* second uplink channels.

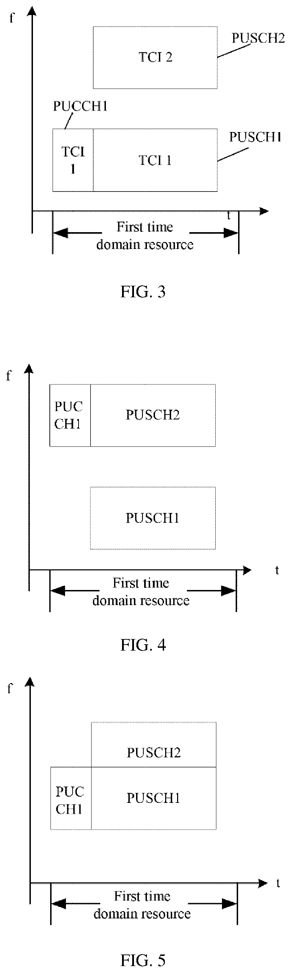

For example, please refer to FIG. 3, which is a schematic diagram of a method for determining at least one second uplink channel provided in an embodiment of the present application.

In FIG. 3, the target first uplink channel being a PUCCH and the second uplink channels being PUSCHs is taken as an example, to illustrate a mode in which the first communication apparatus determines at least one PUSCH based on a relative index of a TCI state or an indicated relative index of a TCI state.

As shown in FIG. 3, within the first time domain resource, the first communication apparatus is to send PUCCH1, PUSCH1 and PUSCH2, where a relative index of a TCI state of PUCCH1 is the indicated first TCI state, a relative index of a TCI state of PUSCH1 is the indicated first TCI state, and a relative index of a TCI state of PUSCH2 is the indicated second TCI state. The first communication apparatus determines that both the relative index of the TCI of PUCCH1 and the relative index of the TCI of PUSCH1 are 1, then PUSCH1 is determined as a PUSCH corresponding to PUCCH1, and UCI that PUCCH1 should carry is multiplexed to PUSCH1 for transmission.

It should be noted that in this mode, regardless of whether the second uplink channels are dynamically scheduled by the second communication apparatus through DCI or scheduled by the second communication apparatus or the first communication apparatus via Configured Grant (Configured Grant, CG), each second uplink channel corresponds to one TCI state, and the TCI states corresponding to any two second uplink channels may be the same or different, where the CG scheduling may be divided into type (type) 1 and type 2 of CG scheduling. Under type 1 of CG scheduling, the first communication apparatus may obtain transmission parameters through configuration of radio resource control (Radio Resource Control, RRC) signaling sent by the second communication apparatus, and use the transmission parameters to schedule the transmission of the second uplink channels. Under type 2 of CG scheduling, the first communication apparatus may schedule the transmission of the second uplink channels through DCI sent by the second communication apparatus.

In the above Mode 2, when the first communication apparatus performs transmission to multiple transmission points, the UCI corresponding to the target first uplink channel may be information fed back to one transmission point, and in this mode, the *P* second uplink channels with the same TCI state as the target first uplink channel are selected for UCI multiplexing, so that the second communication apparatus can still receive the *P* second uplink channels based on an original TCI state (i.e., the transmission point corresponding to the target first uplink channel). Therefore, when calling the UCI, the transmission point does not need to perform signaling interaction with other transmission points, and can directly perform demodulation to obtain the UCI. In addition, each transmission point can obtain information on whether the UCI corresponding to the target first uplink channel that the respective transmission point transmits has been multiplexed, helping the second communication apparatus correctly perform demodulation when receiving the corresponding UCI.

Mode 3: the transmission parameter is a control-resource-set related higher-layer parameter.

The first communication apparatus determines, from the *N* second uplink channels, second uplink channels associated with a same control-resource-set related higher-layer parameter as the target first uplink channel, as the *P* second uplink channels. The control-resource-set related higher-layer parameter is, for example, the parameter CORESETPoolIndex (with a value of 0 or 1, etc.). For another example, the control-resource-set related higher-layer parameter is an index of a control resource set (this index corresponding to the higher-layer parameter controlResourceSetId, with a value of 0 to 11 or 0 to 15, etc.).

For example, the first communication apparatus determines the control-resource-set related higher-layer parameter associated with an identity (Identity Document, ID) of a resource or a resource group of the target first uplink channel. The identity of the resource or the resource group of the target first uplink channel is, for example, an absolute ID value configured by an RRC parameter. The first communication apparatus determines, from the resources of the N second uplink channels, second uplink channels which are associated with the same control-resource-set higher-layer parameter mentioned above, as the P second uplink channels. The resource or the resource group of the first uplink channel includes, for example, the resource or the resource group required for carrying the UCI. For example, the resource of the first uplink channel may be a PUCCH resource configured by higher-layer signaling (corresponding to the higher-layer parameter PUCCH-Resource or PUCCH-ResourceId) or dynamically indicated by DCI (indicated by the information field in DCI: PUCCH resource indicator). The resource group of the first uplink channel may be a PUCCH resource group (corresponding to the higher-layer parameter PUCCH-ResourceGroup). Resources in a same resource group are associated with a same transmission point, and the TCI state or spatial relationship is updated in a resource group manner. The resource group of the first uplink channel may also be a PUCCH resource set (corresponding to the higher-layer parameter PUCCH-ResourceSet or PUCCH-ResourceSetId). For the resources of the second uplink channels, reference may be made to the content discussed above, and details will not be repeated here.

Specifically, the first communication apparatus determines that an index of a control resource set associated with the identity of the resource or the resource group of the target first uplink channel is 1, and then determines, from the N second uplink channels, second uplink channels associated with the index of the control resource set being 1 as the P second uplink channels.

For example, the first communication apparatus determines that a value of the control-resource-set higher-layer parameter CORSETPoolIndex associated with the identity of the resource of the target first uplink channel is 0, and the first communication apparatus determines, from the *N* second uplink channels, second uplink channels associated with the value of the control-resource-set higher-layer parameter CORSETPoolIndex being 0, as the *P* second uplink channels.

For another example, the first communication apparatus determines that the target first uplink channel is scheduled by a CORESET with a value of CORESETPoolIndex being 0, and then determines, from the *N* second uplink channels, second uplink channels scheduled by the CORESET with the value of CORESETPoolIndex being 0, as the *P* second uplink channels, and multiplexes the UCI corresponding to the target first uplink channel to the second uplink channels associated with the target first uplink channel for transmission, that is, the UCI being transmitted in the *P* second uplink channels.

In a possible implementation, in the M-DCI scheduling mode, the second uplink channels may be scheduled by two transmission points, or the first uplink channel may be independently indicated by two transmission points, and the two transmission points have CORESETs with different CORESETPoolIndex respectively. In this case, the first communication apparatus may still use Mode 3 to determine the *P* second uplink channels corresponding to the target first uplink channel from the *N* second uplink channels.

It should be noted that the association relationship of the target first uplink channel and the second uplink channels with the control-resource-set related parameter may be pre-configured, and the same control-resource-set related parameter may be associated with multiple target first uplink channels and multiple second uplink channels, which is not limited in the present application.

Mode 4: the transmission parameter is an index of an RB.

The first communication apparatus determines, from the N second uplink channels, second uplink channels which have an index of an RB meeting a second condition, as the *P* second uplink channels. The second condition includes: a maximum value of the index of the RB, a minimum value of the index of the RB, the index of the RB is less than a first threshold, the index of the RB is greater than a first threshold, the index of the RB is an odd number, or the index of RB is an even number.

The second condition includes the maximum value of the index of the RB. In this case, the first communication apparatus determines indexes of RBs of the *N* second uplink channels, and determines, from the *N* second uplink channels, second uplink channels with the index of the RB being the maximum value, as the *P* second uplink channels.

Please refer to FIG. 4, which is a schematic diagram of a method for determining at least one second uplink channel provided in an embodiment of the present application. In FIG. 4, the first uplink channel being a PUCCH and the second uplink channels being PUSCHs is taken as an example. As shown in FIG. 4, within the first time domain resource, the first communication apparatus is to send PUCCH1, PUSCH1 and PUSCH2. The first communication apparatus determines that the index of the RB of PUSCH1 is greater than the index of the RB of PUSCH2, then the UCI corresponding to PUCCH1 is multiplexed to the PUSCH with the largest index of the RB, that is, PUSCH2.

The second condition includes the minimum value of the index of the RB. In this case, the first communication apparatus determines, from the *N* second uplink channels, the minimum value of the index of the RB as *K* second uplink channels.

Please refer to FIG. 5, which is a schematic diagram of a method for determining at least one second uplink channel provided in an embodiment of the present application. In FIG. 5, the first uplink channel being a PUCCH and the second uplink channels being PUSCHs is taken as an example. As shown in FIG. 5, within the first time domain resource, the first communication apparatus is to send PUCCH1, PUSCH1 and PUSCH2. The first communication apparatus determines that the index of the RB of PUSCH1 is less than the index of the RB of PUSCH2, the first communication apparatus multiplexes the UCI corresponding to PUCCH1 to the PUSCH with the smallest index of the RB, that is, PUSCH1.

The second condition includes that the index of the RB is less than the first threshold. In this case, the first communication apparatus determines, from the *N* second uplink channels, second uplink channels with the index of the RB being less than the first threshold, as the *P* second uplink channels.

The second condition includes that the index of the RB is greater than the first threshold. In this case, the first communication apparatus determines, from the *N* second uplink channels, second uplink channels with the index of the RB being greater than the first threshold, as the *P* second uplink channels.

The second condition includes that the index of the RB is an odd number. In this case, the first communication apparatus determines, from the *N* second uplink channels, second uplink channels with the index of the RB being an odd number, as the *P* second uplink channels.

The second condition includes that the index of the RB is an odd number. In this case, the first communication apparatus determines, from the *N* second uplink channels, second uplink channels with the index of the RB being an even number, as the *P* second uplink channels.

In the S-DCI scheduling mode, the *N* second uplink channels are all scheduled by one piece of DCI. In other words, the first communication apparatus may multiplex the UCI corresponding to the target first uplink channel to any second uplink channel of the *N* second uplink channels. Therefore, the first communication apparatus may determine the second uplink channels corresponding to the target first uplink channel through the second condition, so that when receiving the UCI corresponding to the target first uplink channel, the second communication apparatus can accurately determine the second uplink channels corresponding to the target first uplink channel from the *N* second uplink channels, and then obtain the UCI of the target first uplink channel. In other words, this mode enables the first communication apparatus and the second communication apparatus to have a common understanding, and then the second communication apparatus can accurately obtain the corresponding UCI.

Mode 5: the transmission parameter is the identity of the resource or the resource group of the target first uplink channel.

The first communication apparatus determines, from the *N* second uplink channels, resources of second uplink channels associated with the identity of the resource or the resource group corresponding to the target first uplink channel, as the *P* second uplink channels.

For the meaning of the identity of the resource or the resource group, and the meaning of the resource of the at least one second uplink channel, reference may be made to the above Mode 3, and details will not be repeated here.

The following takes an example for explanation, where the identities of the resources or the resource groups of the first uplink channels are PUUCH1 and PUCCH2, and the resources of the *N* second uplink channels are PUSCH transmission opportunity 1, PUSCH transmission opportunity 2 and PUSCH transmission opportunity 3.

The first communication apparatus determines that the identity of the resource or the resource group of PUCCH1 is an odd number, and then determines that PUSCH transmission opportunity 1 and PUSCH transmission opportunity 3 are associated with PUCCH1. The first communication apparatus determines that the identity of the resource or the resource group of PUCCH2 is an even number, and then determines that PUSCH transmission opportunity 2 is associated with PUCCH2.

Or, the first communication apparatus determines that the identity of the resource or the resource group of PUCCH1 is less than the identity of the resource or the resource group of PUCCH2, and then determines that PUCCH1 is associated with PUSCH transmission opportunity 1, and PUCCH2 is associated with PUSCH transmission opportunity 2.

Mode 6: the transmission parameter is DCI.

The first communication apparatus determines, from the *N* second uplink channels, second uplink channels that are indicated by the same DCI as the target first uplink channel, as the *P* second uplink channels.

Specifically, the first communication apparatus determines that the identity of the resource or the resource group of the target first uplink channel is indicated by first DCI, and then determines, from the resources of the *N* second uplink channels, resources of second uplink channels indicated by the first DCI, as the *P* second uplink channels. For the resources of the second uplink channels, reference may be made to the content discussed in the previous description, and details will not be repeated here.

The following takes an example for explanation, where the identities of the resources or the resource groups of the first uplink channels are PUUCH1 and PUCCH2, and the resources of the N second uplink channels are PUSCH transmission opportunity 1, PUSCH transmission opportunity 2 and PUSCH transmission opportunity 3.

The second communication apparatus dynamically indicates that PUCCH1 is associated with PUSCH transmission opportunity 1 through the PUCCH resource indication field in DCI. Then, the first communication apparatus may determine that PUCCH1 is associated with PUSCH transmission opportunity 1 based on the DCI dynamic indication, and then multiplex the UCI corresponding to PUCCH1 to PUSCH transmission opportunity 1.

Or, the second communication apparatus dynamically indicates that both the resource or the resource group of PUCCH1 and the resource or the resource group of PUCCH2 are associated with PUSCH transmission opportunity 1 through the PUCCH resource indication field in DCI. Then, the first communication apparatus determines whether the resource or the resource group of PUCCH 1 and the resource or the resource group of PUCCH2 overlap with PUSCH transmission opportunity 1. If it is determined that the resource or the resource group of PUCCH1 overlaps with PUSCH transmission opportunity 1, the UCI corresponding to PUCCH1 is multiplexed to PUSCH transmission opportunity 1 for transmission.

In a possible implementation, under the M-DCI scheduling mode, the second communication apparatus may indicate the resources or the resource groups of the first uplink channels through two pieces of DCI respectively. At this time, the first communication apparatus may still determine the association between the resources or the resource groups of the first uplink channels and the resources of the second uplink channels according to the indication fields from the second communication apparatus.

It should be noted that the first communication apparatus may also select any two or more of the above six Modes (Modes 1 to 6) to determine the at least one second uplink channel corresponding to the target first uplink channel.

For example, the first communication apparatus determines the *P* second uplink channels using Mode 1 and Mode 3, that is, the first communication apparatus determines that both the index of the TCI and CORESETPoolIndex for the target first uplink channel are the same as those for the *P* second uplink channels.

In the above first case (i.e., *M* is equal to 1, and *N* is greater than or equal to 2), and in a case of using Example 4 (i.e., determining the at least one second uplink channel according to physical resources), the mode in which the first communication apparatus determines the at least one second uplink channel corresponding to the target first uplink channel is described.

Mode 7: the physical resources are frequency domain resources.

The first communication apparatus determines, from the *N* second uplink channels, second uplink channels whose frequency domain resources overlap with the frequency domain resource of the target first uplink channel as the *P* second uplink channels.

Specifically, the first communication apparatus determines a frequency domain resource position of the target first uplink channel and a frequency domain resource position of each second uplink channel of the *N* second uplink channels, and determines, from the *N* second uplink channels, second uplink channels whose frequency domain resource positions completely or partially overlap with the frequency domain resource position of the target first uplink channel, as the *P* second uplink channels.

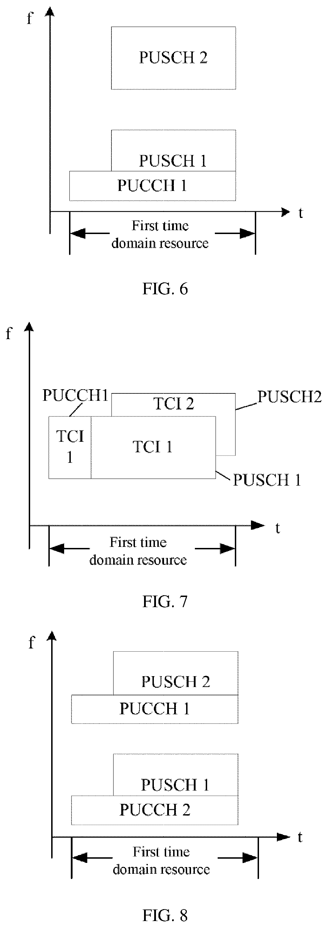

Please refer to FIG. 6, which is a schematic diagram of a method for determining at least one second uplink channel provided in an embodiment of the present application. In FIG. 6, the first uplink channel being a PUCCH and the second uplink channels being PUSCHs is taken as an example. As shown in FIG. 6, within the first time domain resource, the first communication apparatus is to send PUCCH1, PUSCH1 and PUSCH2, and the frequency domain resource of PUCCH1 partially overlaps with the frequency domain resource of PUSCH1. Then the first communication apparatus determines PUSCH1 as the PUSCH corresponding to PUCCH1, and multiplexes the UCI corresponding to PUCCH1 to PUSCH1 for transmission.

In the first case above (i.e., *M* is equal to 1, and *N* is greater than or equal to 2), and in a case of using Example 5 (i.e., determining the at least one second uplink channel according to transmission parameters and physical resources), the mode in which the first communication apparatus determines the at least one second uplink channel corresponding to the target first uplink channel is described.

In this case, any one or more of the above six Modes (Modes 1 to 6) and Mode 7 may be combined to determine the *P* second uplink channels.

For example, the first communication apparatus adopts Mode 3 and Mode 7, i.e., the first communication apparatus determines that CORESETPoolIndex of the target first uplink channel is the same as CORESETPoolIndex of the at least one second uplink channel, and determines that the frequency domain resource of the target first uplink channel overlaps with the frequency domain resource of the at least one second uplink channel.

In the second case above (i.e., *M* is greater than or equal to 2, and *N* is 1), the first communication apparatus may use the *M* first uplink channels or some of the M first uplink channels as the target first uplink channels, and there are multiple target first uplink channels. Then all of these multiple target first uplink channels are multiplexed to one second uplink channel.

In a possible implementation, if the first communication apparatus determines that there are multiple TCI states for the target first uplink channel and only one TCI state is indicated for the *P* second uplink channels, and that the *P* second uplink channels have simultaneous transmission capabilities, in this case, after the first communication apparatus multiplexes the UCI corresponding to the target first uplink channel to the *P* second uplink channels, the *P* second uplink channels may also be transmitted using the multiple TCI states. The simultaneous transmission capabilities are, for example, a capability value recorded by the first communication apparatus, a capability-related RRC parameter indicated by the second communication apparatus, and the first uplink channel and the second uplink channel correspond to different capability values or RRC parameters.

If the first communication apparatus determines that the *P* second uplink channels do not have simultaneous transmission capabilities, the *P* second uplink channels cannot be sent using the multiple TCI states.

In the third case above (i.e., *M* is greater than or equal to 2, and *N* is greater than or equal to 2), the modes in which the first communication apparatus determines the at least one second uplink channel corresponding to the target first uplink channel are also different, which is explained in different cases below.

The following introduces the cases where the number of target first uplink channels is 1 or more than one, respectively.

In the first sub-case of the third case, that is, the number of target first uplink channels is 1, for the modes in which the first communication apparatus determines the at least one second uplink channel corresponding to the target first uplink channel, which are the same as the first case above, reference may be made to the seven Modes (Modes 1 to 7) in the first case above, and details will not be repeated here.

In the second sub-case of the third case, the number of target first uplink channels is more than one. That is, the at least one second uplink channel corresponding to each target first uplink channel needs to be determined. For the modes of determining the at least one second uplink channel corresponding to each first uplink channel, reference may be made to the content discussed in the seven Modes (Modes 1 to 7) in the first case above, and details will not be repeated here.

In addition, the first communication apparatus may also determine the at least one second uplink channel corresponding to the target first uplink channel in the following modes.

Mode 8: the transmission parameter is a relative index of an RB.

When the transmission parameter is the index of the RB, that is, when Mode 4 in the first case is used to determine the at least one second uplink channel corresponding to the target first uplink channel, in a possible implementation, the first communication apparatus may also determine that the relative indexes of the RBs of the *M* first uplink channels are the same as the relative indexes of the RBs of the *N* second uplink channels.

The following takes an example for explanation, where the first uplink channels are PUCCHs and the second uplink channels are PUSCHs. For example, the *M* first uplink channels are PUCCH1, PUCCH2, and PUCCH3, respectively, and the indexes of their RBs are 1, 2, and 3, in sequence; the *N* second uplink channels are PUSCH1, PUSCH2, and PUSCH3, respectively, and the indexes of their RBs are 4, 5, and 6, in sequence (the indexes of the RBs of PUCCHs and PUSCHs are jointly determined, and the indexes for PUSCHs are determined by sorting all PUSCHs and PUCCHs). Based on the indexes of the RBs of the first uplink channels and the second uplink channels, a correspondence between the first uplink channels and the second uplink channels is shown in Table 1.

**Table 1**

| Index of RB of first uplink channel | Index of RB of second uplink channel |
|---|---|
| 1 | 4 |
| 2 | 5 |
| 3 | 6 |

For another example, the *M* first uplink channels are PUCCH1, PUCCH2, PUCCH3, respectively, and the indexes of their RBs are 1, 2, and 3, in sequence; the *N* second uplink channels are PUSCH1, PUSCH2, and PUSCH3, respectively, and the indexes of their RBs are 2, 3, and 1, in sequence (the indexes of the RBs of PUCCHs and PUSCHs are independently determined, i.e., the indexes for PUSCHs are determined by sorting only PUSCHs and the indexes for PUCCHs are determined by sorting only PUCCHs). Based on the indexes of the RBs of the first uplink channels and the second uplink channels, a correspondence between the first uplink channels and the second uplink channels is shown in Table 2.

**Table 2**

| Index of RB of first uplink channel | Index of RB of second uplink channel |
|---|---|
| 1 | 1 |
| 2 | 2 |
| 3 | 3 |

Mode 9: the physical resources are frequency domain resources.

The first communication apparatus may also determine, from the *N* second uplink channels, second uplink channels whose frequency domain resources do not overlap with the frequency domain resource of the target first uplink channel at all, as the *P* second uplink channels, so as to avoid a situation where the *P* second uplink channels corresponding to respective target first uplink channels may be easily confusing, since there are too many target first uplink channels and the *P* second uplink channels are determined by the overlapping situation of frequency domain resources.

In this case, the first communication apparatus may also determine the *P* second uplink channels by combining any two or more of the above nine Modes. For example, the *P* second uplink channels are determined by using Modes 1 and 3, that is, the index of the TCI and CORESETPoolIndex, or the *P* second uplink channels are determined by using Modes 1, 3 and 4, which is not specifically limited in the embodiments of the present application.

However, in the third case, and when there are multiple target first uplink channels, the first communication apparatus may also separately determine the corresponding at least one second uplink channel for the multiple target first uplink channels.

For example, the first communication apparatus may simultaneously determine the at least one second uplink channel corresponding to each of the multiple target first uplink channels from the *N* second uplink channels. In this case, the first communication apparatus determines that the at least one second uplink channel for one of any two target first uplink channels of the multiple target first uplink channels is partially or completely the same as the at least one second uplink channel for the other of the any two target first uplink channels.

In this case, the first communication apparatus may record serial numbers of the *N* second uplink channels, that is, generate first information (or referred to as a multiplexing list), and the first communication apparatus determines that the at least one second uplink channel for one of any two target first uplink channels of the multiple target first uplink channels is partially or completely the same as the at least one second uplink channel for the other of the any two target first uplink channels. In other words, the first information includes the serial number of the at least one second uplink channel.

Or, for example, the first communication apparatus may sequentially determine the at least one second uplink channel corresponding to each of the multiple target first uplink channels from the *N* second uplink channels.

When the first communication apparatus determines the at least one second uplink channel corresponding to each of the multiple target first uplink channels, such determining may be executed in a preset order, and the preset order may be configured by the second communication apparatus, or specified by a protocol, which is not limited in the embodiments of the present application.

Or, the first communication apparatus performs such determining based on a certain order. The certain order may be based on a numerical value of the transmission parameter. The transmission parameter is, for example, the index of the RB, the identity of the resource or the resource group of the first uplink channel, the index of the TCI state, and the TCI code point. The TCI code point is used to indicate the TCI states indicated by the TCI indication field, which specifically are, for example, the first TCI state, the second TCI, and the *Nth* TCI state.

Below, the first uplink channels being PUCCH1 and PUCCH2 is taken as an example, to illustrate a mode in which the first communication apparatus determines the at least one second uplink channel corresponding to each of the multiple target first uplink channels in a certain order.

The first communication apparatus determines that PUCCH1 is associated with the first TCI state, and PUCCH2 is associated with the second TCI state, so the first communication apparatus first determines the at least one second uplink channel corresponding to PUCCH1, and then determines the at least one second uplink channel corresponding to PUCCH2.

In this case, the first communication apparatus may record the serial numbers of the *N* second uplink channels, that is, generate a multiplexing list. In other words, the multiplexing list includes the serial numbers of the *N* second uplink channels.

After determining the at least one second uplink channel corresponding to one of the multiple target first uplink channels, the first communication apparatus may delete first information from the multiplexing list. The first information includes the serial number or information of the at least one second uplink channel. Or, the first communication apparatus updates the serial number or information of the at least one second uplink channel included in the first information. Then, the first communication apparatus determines the at least one second uplink channel corresponding to another target first uplink channel of the multiple target first uplink channels from the remaining second uplink channels in the multiplexing list. For example, the selection order of the first uplink channels may be determined according to at least one transmission parameter in Mode 1 to Mode 9. For example, a first uplink channel with a lowest RB index is selected first, and a first uplink channel with a second lowest RB index is selected later, and so on. The selection order of the first uplink channels may also be determined by other transmission parameters, which is not limited in the present application.

Below, the first uplink channels being PUCCHs and the second uplink channels being PUSCHs is taken as an example. The *M* first uplink channels are PUCCH1, PUCCH2, PUCCH3 and PUCCH4; the serial numbers corresponding to the *N* second uplink channels are PUSCH1, PUSCH2, PUSCH3, PUSCH4 and PUSCH5. The first communication apparatus stores the serial numbers of the *N* second uplink channels in the multiplexing list.

As shown in Table 3 below, this is an example of the multiplexing list.

**Table 3**

| Serial number of second uplink channel |
|---|
| 1 |
| 2 |
| 3 |
| 4 |
| 5 |

As shown in Table 2, if the determined second uplink channels corresponding to PUCCH1 are PUSCH1 and PUSCH2, and the UCI that should be carried by PUCCH1 is multiplexed to PUSCH1 and PUSCH2 for transmission, then PUSCH1 and PUSCH2 in Table 2 are deleted accordingly, that is, the multiplexing list at this time is Table 3, and the first communication apparatus then determines which PUSCHs the UCI carried by PUCCH2 is multiplexed to according to Table 4.

**Table 4**

| Serial number of second uplink channel |
|---|
| 3 |
| 4 |
| 5 |

Correspondingly, the second communication apparatus also establishes a multiplexing list. When the first communication apparatus deletes PUSCH1 and PUSCH2, the second communication apparatus deletes PUSCH1 and PUSCH2 from the multiplexing list accordingly.

Or, for example, after determining the at least one second uplink channel corresponding to one of the multiple target first uplink channels, the first communication apparatus does not delete the serial number of the at least one second uplink channel included in the first information. Then, the first communication apparatus may still determine, from the second uplink channels corresponding to the first information, the at least one second uplink channel corresponding to another target first uplink channel of the multiple target first uplink channels. The at least one second uplink channel corresponding to a target first uplink channel may be partially or completely the same.

In the above three cases (i.e., the first case, the second case, and the third case), the at least one second uplink channel corresponding to one of the target first uplink channels determined by the first communication apparatus based on the above modes should also meet a multiplexing condition.

The multiplexing condition includes: the at least one second uplink channel has a bit carrying UCI; and/or it is determined that a time difference between an instant at which the at least one second uplink channel is sent and an instant at which the target first uplink channel is sent is less than or equal to a first time difference (i.e., the time difference should be sufficient for the first communication apparatus to generate multiplexed information for transmission).

The bit carrying UCI may be understood as whether the second unlink channel can accommodate the bit for the multiplexed UCI, that is, whether the second uplink channel has enough bit capacity to carry the UCI. The time difference is used to indicate the time difference between an instant at which the at least one second uplink channel is sent and an instant at which the target first uplink channel is sent within the first time domain resource. The first time difference may be pre-configured. If there is a second uplink channel that does not meet the above condition in the at least one second uplink channel, the UCI that the target first uplink channel should carry is not multiplexed to the second uplink channel that does not meet the multiplexing condition.

In this case, the first communication apparatus determines that multiple second uplink channels of the *N* second uplink channels are associated with the target first uplink channel. If the first communication apparatus determines that none of the multiple second uplink channels meets the above multiplexing condition, the first communication apparatus determines to send the target first uplink channel; if the first communication apparatus determines that at least one second uplink channel of the multiple second uplink channels meets the above multiplexing condition, the first communication apparatus multiplexes the UCI corresponding to the target first uplink channel to the at least one second uplink channel for transmission.

The embodiments of the present application provides multiple modes of determining the at least one second uplink channel corresponding to the target first uplink channel. Based on the above multiple modes, the first communication apparatus determines to multiplex the UCI carried by the first uplink channel to the at least one second uplink channel, and sends the at least one second uplink channel, so that the second communication apparatus can obtain the corresponding UCI by only receiving the at least one second uplink channel, thereby improving the transmission utilization rate of channels.

In order to provide a mechanism for transmitting UCI, an embodiment of the present application also provides a communication method. In this method, in a case where the first communication apparatus is to send at least one first uplink channel (such as a PUCCH) and at least one second uplink channel (such as a PUSCH) within a time domain resource, the first communication apparatus can drop the at least one second uplink channel and send the at least one first uplink channel. The method provides a mechanism for transmitting UCI. Moreover, in this case, the first communication apparatus does not need to transmit the at least one second uplink channel, but only needs to send the at least one first uplink channel. Since the simultaneous transmission of the first uplink channel and the second uplink channel is not currently supported, the method can ensure that a channel with a higher priority is transmitted.

The following takes an example where the first uplink channel is a PUCCH, the second uplink channel is a PUSCH, and UCI is used to carry HARQ-ACK and/or CSI to illustrate the communication method provided in the embodiment of the present application.
1. Single transmission of PUCCH (carrying HARQ-ACK and/or CSI) + simultaneous transmission of PUSCH.
   Option (option) 1: multiplex UCI to one of PUSCH transmission opportunities or repeated transmissions or layers (layer groups) for transmission.
      (1) Determine based on the TCI state indication: multiplex the UCI to a PUSCH with a same TCI state for transmission.
      (2) Determine based on the index of the RB: multiplex the UCI to a PUSCH with the smallest index of the RB or the largest index of the RB for transmission.
      (3) Determine based on the overlapping situation between UCI and PUSCH (such as frequency domain overlap) or the resource positions of PUCCH and PUSCH: multiplex the UCI to a PUSCH that overlaps or does not overlap with the corresponding PUCCH for transmission.
      (4) Determine based on the higher-layer parameter CORESETPoolIndex: if the PUCCH resource and the PUSCH are associated with the same higher-layer parameter CORESETPoolIndex or the CORESTE or DCI corresponding to this same higher-layer parameter CORESETPoolIndex, multiplex the PUCCH to the associated PUSCH.
      (5) Determine based on the PUCCH resource group ID or PUCCH resource ID (index): pre-establish an association relationship between the PUCCH resource group ID or PUCCH resource ID and the PUSCH transmission opportunity/repeated transmission/layer group, and multiplex the UCI to the associated PUSCH for transmission. The methods for establishing the association relationship are as follows:
         a PUCCH resource or a PUCCH resource group with a PUCCH resource ID or PUCCH resource group ID (an absolute ID value configured by an RRC parameter) being an odd number (or an even number) is associated with a first PUSCH;
         a PUCCH resource or a PUCCH resource group with a smaller PUCCH resource relative ID or PUCCH resource group relative ID (with a smaller ID value or group ID value among 2 PUCCH resources) is associated with a first PUSCH;
         if a PUCCH resource ID or a PUCCH resource group ID and a PUSCH are associated with the same CORESETPoolIndex parameter, the two are considered to be associated.
   Option 2: multiplex the UCI to multiple PUSCH transmission opportunities/repeated transmissions or multiple layers (layer groups) for transmission.
      Based on multiple solutions in Option 1, if there are multiple PUSCH transmission opportunities/repeated transmissions/layer groups that meet the conditions, the UCI may be multiplexed to the multiple PUSCH transmission opportunities/repeated transmissions/layer groups for transmission. For example, according to the paragraph (3) under Option 1, if a PUCCH overlaps with each of multiple PUSCH transmission opportunities/repeated transmissions/layers (layer groups), the UCI may be multiplexed to the multiple PUSCH transmission opportunities/repeated transmissions/layers (layer groups) for transmission.
   Option 3: multiplex the UCI to all the PUSCH transmission opportunities/ repeated transmissions or all the layers (layer groups) for transmission.
2. Simultaneous transmission of PUCCH (carrying HARQ-ACK and/or CSI) + single/simultaneous transmission of PUSCH.

Based on at least one of the UCI multiplexing methods for the single transmission of PUCCH, determine which PUSCH that each PUCCH transmission opportunity/repeated transmission or PUCCH resource is multiplexed to.

Single transmission of PUCCH or repeated transmission of PUSCH refers to transmission within a slot or a subslot (such as TDM-based repeated transmission of PUCCH, which is also single transmission of PUCCH within each slot or subslot).

UCI multiplexing for PUCCH or UCI is performed in a certain order (for example, according to subcarrier indexes, PUCCH resource IDs or PUCCH resource group IDs, TCI state indexes, TCI code point sizes, etc.).

After a PUSCH to which multiplexing is performed for a PUCCH or UCI is determined, the PUSCH is removed from the multiplexing list and the multiplexing process of other UCI or PUCCHs continues.

If there is only one PUSCH transmission opportunity/layer group for transmission, multiple UCI or PUCCH resources may all be multiplexed to the PUSCH for transmission.

Establish an association relationship between a PUCCH transmission opportunity and a PUSCH transmission opportunity, and determine which PUSCH the PUCCH is multiplexed to, based on the association relationship (similar to the methods for the single transmission of PUCCH, described from the perspective of 2 PUCCHs).

Example *A*: For the above-mentioned single transmission of PUCCH (carrying HARQ-ACK and/or CSI) + simultaneous transmission of PUSCH, specific modes of determining the association relationship between PUCCH and PUSCH are as follows.

When repeated transmission is adopted for a PUSCH (such as FDM or SDM) and single transmission is adopted for a PUCCH, the PUCCH may overlap with one transmission opportunity or multiple transmission opportunities of the PUSCH, or overlap with multiple layers of the PUSCH. If the PUCCH is used to carry HARQ-ACK and/or CSI, UCI may be placed on the PUSCH for transmission. At least one of the following methods may be used to determine which PUSCH to place the UCI for transmission.

Option 1: multiplex the UCI to one of the PUSCH transmission opportunities or repeated transmissions or layers (layer groups) for transmission.

Option 1.1: determine, based on the TCI state indication, which PUSCH (or PUSCH resource) that the UCI is multiplexed to.

For example, through the unified (unified) TCI state indication, the TCI state of the UCI (corresponding to the PUCCH) is determined to be TCI 1, and the TCI states of two transmission opportunities, two frequency domain parts or two layer groups of the PUSCH are TCI 1 and TCI 2 respectively, so the UCI may be multiplexed to the PUSCH transmission opportunity, the frequency domain part or the layer group with the same TCI state. The UCI multiplexing process is as shown in FIG. 3, and this method is applicable to both S-DCI scheduling and M-DCI scheduling.

Frequency domain part 1 and frequency domain part 2 represent different parts of the frequency domain that a TB is mapped to, which are applied to the FDM-based PUSCH transmission scheme. Please refer to FIG. 7, which is a schematic diagram of determining a second uplink channel for carrying UCI. As shown in FIG. 7, it is also applicable to replace the above PUSCH transmission opportunity or frequency domain part with the layer group of PUSCH.

Based on the above method, when the first communication apparatus performs multi-TRP transmission, UCI may be HARQ-ACK or CSI fed back to one TRP. According to this method, UCI can be sent without changing its original TCI state, that is, UCI is still sent to an appropriate TRP according to the scheduling of the second communication apparatus, reducing the signaling interaction between multiple TRPs.

Option 1.2: determine, based on the index of the RB, which PUSCH (or PUSCH resource) that the UCI is multiplexed to.

Under the S-DCI scheduling, multiple PUSCH transmission opportunities/PUSCH repetition versions or multiple PUSCH layer groups are all scheduled by one piece of DCI, that is, this technology is applied to the scenario of ideal backhaul. Therefore, the UCI may be multiplexed to any frequency domain part or any frequency domain resource. In order to make the network side and the UE have a common understanding of which PUSCH (or PUSCH resource) that UCI is multiplexed to, the UCI may be multiplexed to a PUSCH transmission opportunity or a frequency domain part with a smallest RB index or a largest RB index, as shown in FIG. 4 and FIG. 5. In FIG. 4 and FIG. 5, the transmission opportunities or frequency domain parts of the two PUSCHs may not overlap at all or may overlap partially, and the present application does not impose any restrictions on this.

The network side and the UE may determine the UCI transmission resource position accordingly.

Option 1.3: determine, based on overlapping situation between UCI and PUSCH or the resource positions of PUCCH and PUSCH or the indicated PUCCH resource, which PUSCH (or PUSCH resource) that the UCI is multiplexed to.

For example, the UE may multiplex the UCI to a PUSCH transmission opportunity or a frequency domain part that overlaps with the corresponding PUCCH for transmission, so that the network side can dynamically indicate the PUSCH resource for multiplexing through the PUCCH resource indication field in the DCI. Please refer to FIG. 8, which is a schematic diagram of determining a second uplink channel for carrying UCI. As shown in FIG. 8, if the network side wants to multiplex the UCI to PUSCH transmission opportunity 1, the resource of PUCCH 1 may be dynamically indicated in the DCI; if the network side wants to multiplex the UCI to PUSCH transmission opportunity 2, the resource of PUCCH 2 may be dynamically indicated in the DCI.

Similarly, when the number of PUCCH transmission opportunities or frequency domain parts is at most 2, the UCI may also be multiplexed to a PUSCH transmission opportunity or frequency domain part that does not overlap with the corresponding PUCCH for transmission. Based on this, the network side and the UE can also determine a unique UCI transmission resource position, which will not cause the problem of inconsistent understanding of UCI transmission resources between the two.

Option 1.4: determine, based on the higher-layer parameter CORESETPoolIndex, which PUSCH (or PUSCH resource) that the UCI is multiplexed to.

For example, the association relationship between UCI (or PUCCH) and PUSCH is established through a higher-layer parameter, and the UCI is multiplexed to a PUSCH transmission opportunity/repeated transmission/layer group/PUSCH associated with the UCI. The higher-layer parameter may be the higher-layer parameter CORESETPoolIndex configured within the CORESET. Under the M-DCI scheduling, two TRPs (corresponding to CORESETs with different parameters CORESETPoolIndex) schedule the PUSCHs respectively, and the two TRPs may also indicate PUCCH resources independently. If the PUCCH resource and the PUSCH are associated with the same higher-layer parameter CORESETPoolIndex or with the CORESTE or DCI corresponding to the same higher-layer parameter CORESETPoolIndex, the PUCCH is multiplexed to the associated PUSCH. The association of PUCCH/PUSCH with CORESETPoolIndex means that the CORESET where the PDCCH that schedules PUCCH or PUSCH is located has the same CORESETPoolIndex value.

Option 1.5: determine, based on the PUCCH group ID or the PUCCH resource ID (index), which PUSCH (or PUSCH resource) that the UCI is multiplexed to.

For example, an association relationship between a PUCCH resource group ID or a PUCCH resource ID and a PUSCH transmission opportunity/repeated transmission/layer group may be pre-established, and the association relationship can be at least one of the following.

A PUCCH resource or a PUCCH resource group with a PUCCH resource ID or a PUCCH resource group ID (an absolute ID value configured by an RRC parameter) being an odd number (or an even number) is associated with a first PUSCH; a PUCCH resource or a PUCCH resource group with a PUCCH resource ID or a PUCCH resource group ID (an absolute ID value configured by an RRC parameter) being an even number (or an odd number) is associated with a second PUSCH.

A PUCCH resource or a PUCCH resource group with a smaller PUCCH resource relative ID or PUCCH resource group relative ID (with a smaller ID value or group ID value among 2 PUCCH resources) is associated with a first PUSCH; a PUCCH resource or a PUCCH resource group with a larger PUCCH resource relative ID or PUCCH resource group relative ID (with a smaller ID value or group ID value among 2 PUCCH resources) is associated with a second PUSCH.

If a PUCCH resource ID or a PUCCH resource group ID and a PUSCH are associated with the same CORESETPoolIndex parameter, the two are considered to be associated. For example, the association between the PUCCH resource ID or the PUCCH resource group ID and CORESETPoolIndex is established in a predefined manner. For example, in a case where up to *N* PUCCH resource groups are configured, PUCCH resource groups 0, 2, 4, ... are associated with a value of CORESETPoolIndex being 0, and PUCCH resource groups 1, 3, ... are associated with a value of CORESETPoolIndex being 1.

The first PUSCH may be the n-th transmission opportunity, the n-th frequency domain resource part, the n-th layer group (such as a layer group with a smaller or larger layer number), the n-th repeated transmission, a PUSCH scheduled by a PDCCH within a CORESET with a value of CORESETPoolIndex being n, etc.

When the DCI indicates a PUCCH resource, the associated PUSCH may be determined based on the indicated PUCCH resource ID or the PUCCH resource group ID where the PUCCH resource is located, and then the UCI is multiplexed to the associated PUSCH.

When one piece of DCI indicates two PUCCH resources, if only one PUCCH resource overlaps with the PUSCH, the overlapping PUCCH resource is multiplexed to the PUSCH associated with the overlapping PUCCH resource, based on the association relationship between the overlapping PUCCH resource ID or PUCCH resource group ID and the PUSCH.

When M-DCI scheduling is used, two pieces of DCI can indicate PUCCH resources respectively. At this time, which PUSCH that the UCI is multiplexed to may still be determined based on the association relationship between the PUCCH resource or the PUCCH resource group and the PUSCH.

Option 2: multiplex the UCI to multiple PUSCH transmission opportunities/repeated transmissions or multiple layers (layer groups) for transmission.

According to multiple solutions under Option 1, if there are multiple PUSCH transmission opportunities/repeated transmissions/layer groups that meet the conditions, the UCI may be multiplexed to the multiple PUSCH transmission opportunities/repeated transmissions/layer groups for transmission. For example, according to Option 1-3, if a PUCCH overlaps with each of multiple PUSCH transmission opportunities/repeated transmissions/layers (layer groups), the UCI may be multiplexed to the multiple PUSCH transmission opportunities/repeated transmissions/layers (layer groups) for transmission.

Option 3: multiplex the UCI to all the PUSCH transmission opportunities/repeated transmissions or all the layers (layer groups) for transmission.

If the terminal supports multi-panel simultaneous transmission capability, for example, both PUSCH and PUCCH having simultaneous transmission capability (sent using two TCI states), the UCI may be multiplexed to all PUSCHs (transmission opportunities/repeated transmissions/layer groups), which are available for transmission, and be transmitted, so as to increase the reliability of UCI transmission.

Each method in this embodiment is applicable to dynamically-scheduled PUSCH or CG-scheduled PUSCH. In addition, the PUCCH or PUSCH in the present application refers to the physical channel in a service cell, and the PUCCH or PUSCH in a different cell is not considered in the present application.

In all embodiments of the present application, for the convenience of description, two or more PUSCHs may be used to represent/replace simultaneously-transmitted or repeatedly-transmitted PUSCHs. When S-DCI scheduling is performed, two or more PUSCHs can be used to represent two or more PUSCH transmission opportunities, repeated transmissions or layer groups, etc.

Example *B*: for the above-mentioned simultaneous/repeated transmission of PUCCH, and single transmission or simultaneous/repeated transmission of PUSCH, specific modes of determining the association relationship between PUCCH and PUSCH are as follows.

If simultaneous transmission or repeated transmission is adopted for PUCCH (repeated transmission based on FDM or SFN, or FDM transmission between two PUCCH resources scheduled by M-DCI, etc.), and single transmission or simultaneous transmission or repeated transmission is adopted for PUSCH, the multiplexing of each PUCCH resource or each piece of UCI needs to be considered.

Single transmission of PUCCH or repeated transmission of PUSCH refers to transmission within a slot or a subslot (such as TDM-based repeated transmission of PUCCH, which is also single transmission of PUCCH within each slot or subslot).

Option *A*: determine, based on at least one of the methods in embodiment 1, which PUSCH that each PUCCH transmission opportunity/repeated transmission or PUCCH resource is multiplexed to. UCI multiplexing for PUCCH or UCI is performed in a certain order (for example, according to subcarrier indexes from small to large, PUCCH resource IDs or PUCCH resource group IDs from small to large, TCI state indexes from small to large, TCI code point sizes, etc.). TCI code point refers to the first TCI state, the second TCI state, the Nth TCI state, etc., indicated by the TCI indication field. For example, if one PUCCH is associated with the first TCI state in the TCI indication, and another PUCCH is associated with the second TCI state in the TCI indication, the UCI for the PUCCH associated with the first TCI state is multiplexed first.

After a PUSCH for multiplexing is determined for a PUCCH or UCI, the PUSCH is removed from the multiplexing list, and the multiplexing process of other UCI or PUCCHs continues. Or, after a PUSCH for multiplexing is determined for a PUCCH or UCI, the PUSCH does not need to be removed from the multiplexing list. During the determination process for other PUCCH or UCI multiplexing, if this PUSCH still meets the multiplexing condition, the UCI may still be multiplexed to this PUSCH.

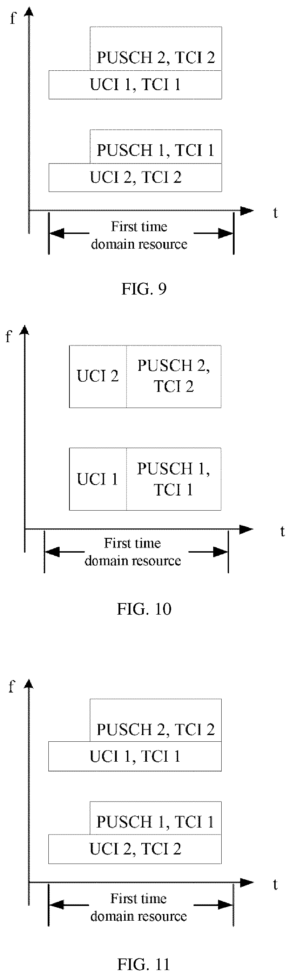

For example, the multiplexing of each piece of UCI/each PUCCH is determined according to Option 1 in embodiment 1. Please refer to FIG. 9, which is a schematic diagram of determining a second uplink channel for carrying UCI. As shown in FIG. 9, the TCI state of UCI 1 is the same as the TCI state of PUSCH 1, and the two may be multiplexed together for transmission. The TCI state of UCI 2 is the same as the TCI state of PUSCH 2, and the two may be multiplexed together for transmission. Please refer to FIG. 10, which is a schematic diagram of determining a second uplink channel for carrying UCI. The situation after UCI multiplexing is shown in FIG. 10.

Option *B*: if there is only one PUSCH transmission opportunity/layer group for transmission, multiple pieces of UCI or PUCCH resources may all be multiplexed to the PUSCH for transmission.

Optionally, if there are multiple TCI states for UCI/PUCCH, and PUSCH is only indicated with one TCI state, after the two are multiplexed, the PUSCH may also be transmitted using two TCI states. For example, for this case, a following situation is used: both PUCCH and PUSCH have simultaneous transmission capabilities (for example, the capability values reported by corresponding terminals, or the capability-related RRC parameters indicated by the gNB, with the PUCCH and PUSCH corresponding to different capability values or RRC parameters). If the PUCCH has the simultaneous transmission capability, but PUSCH does not have the simultaneous transmission capability, the PUSCH cannot be sent using two TCI states.

Option C: establish an association relationship between a PUCCH transmission opportunity and a PUSCH transmission opportunity, and determine, based on the association relationship, which PUSCH that a PUCCH is multiplexed to.

Similarly, the association relationship between PUCCH and PUSCH may be established according to the methods in embodiment 1. For example, the association between PUCCH and PUSCH may be established according to the TCI state indication, the index of the RB, the overlapping situation between UCI and PUSCH or the resource positions of PUCCH and PUSCH, the higher-layer parameter CORESETPoolIndex, the PUCCH group ID or the PUCCH resource ID (index), etc.

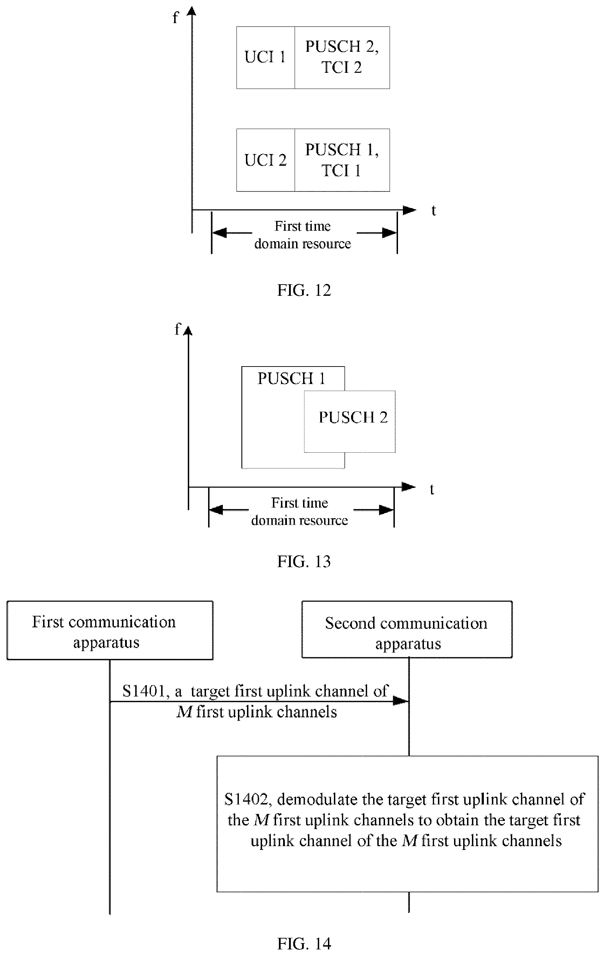

For example, when the association relationship between PUCCH and PUSCH is determined according to the index of the RB, a PUCCH with a lower RB index is associated with a PUSCH with a lower RB index, and a PUCCH with a higher RB index is associated with a PUSCH with a higher RB index. Please refer to FIG. 11, which is a schematic diagram of determining a second uplink channel for carrying UCI. In FIG. 11, UCI 1 with a higher RB index will be multiplexed to PUSCH 2 with a higher RB index for transmission, and UCI 2 with a lower RB index will be multiplexed to PUSCH 1 with a lower RB index for transmission. The situation after UCI multiplexing is as shown in FIG. 12, which is a schematic diagram of determining a second uplink channel for carrying UCI. The PUCCH with a lower RB index in two PUCCH resources or PUCCH transmission opportunities may be obtained by comparing the lowest RB index of each PUCCH resource or PUCCH transmission opportunity, or comparing the lowest RB index of each PUCCH resource or PUCCH transmission opportunity. The same goes for PUSCH, and comparison may be made with the lowest RB index scheduled or allocated to PUSCH. For example, please refer to FIG. 13, which is a schematic diagram of determining a second uplink channel for carrying UCI. In FIG. 13, when sorting is performed according to the lowest RB index of PUSCH, PUSCH 1 has a lower RB index; when sorting is performed according to the highest RB index of PUSCH, PUSCH 2 has a lower RB index.

For another example, when the association between PUCCH and PUSCH is determined according to the TCI state, the TCI state may be a unified (unified) TCI state dynamically indicated by MAC-CE signaling or DCI signaling. According to the TCI indication rule, within a period of time (such as a time slot, or a period of time when MAC-CE signaling is effective), the TCI state of PUSCH or PUCCH will correspond to one of at most two TCI states. Based on this, the PUCCH and the PUSCH having the same TCI state may be associated. When performing UCI multiplexing, the UCI is multiplexed to the associated PUSCH and sent to an appropriate TRP using the same TCI state. In this method, both dynamically-scheduled PUSCH and CG-scheduled PUSCH correspond to a specific TCI state. For M-DCI scheduling under non-ideal backhual, each TRP only knows its own scheduling status, and does not know whether other TRPs have scheduled PUCCH or PUSCH transmission. With this method, it can be ensured that each TRP knows whether UCI has been multiplexed for transmission, and then the UCI transmission resources can be correctly determined and demodulation can be performed correctly.

For another example, when the association between PUCCH and PUSCH is determined according to the higher-layer parameter CORESETPoolIndex, if the CORESETs where the DCI indicating PUCCH and PUSCH is located have the same value of COERSETPoolIndex, the two are considered to be associated. For the type 2 of CG scheduling, the association with PUCCH is determined according to the value of COERSETPoolIndex activating the CORESET where the DCI is located; for the type 1 of CG scheduling or PUCCH resources configured by RRC signaling, the association with CORESETPoolIndex may also be established to determine the association between PUCCH and PUSCH.

For another example, the association between PUCCH and PUSCH may also be determined according to the PUCCH resource ID or the PUCCH resource group ID, and the specific method is as shown in Option 1.1 to Option 1.5 above.

Example C: in the above content, it is assumed that both PUCCH and PUSCH, for which simultaneous or repeated transmission is adopted, meet the UCI multiplexing condition, and the UCI multiplexing method is given on this basis. If the transmission time for PUCCH or PUSCH is inconsistent (such as with different starting symbols, durations, etc.), there may be a case where one PUSCH meets the UCI multiplexing condition, while the other PUSCH does not meet the UCI multiplexing condition. When single transmission is adopted for PUCCH (for example, when higher-layer parameters related to repeated transmission or simultaneous transmission are not configured), the following method may be used to determine the UCI multiplexing situation.

The UE multiplexes the UCI to a PUSCH, a PUSCH transmission opportunity or a PUSCH layer group that meets the multiplexing condition for transmission.

The UE makes the UCI be carried on the PUCCH for transmission without UCI multiplexing.

The UE determines whether to perform UCI multiplexing based on the association relationship between PUSCH and PUCCH and the UCI multiplexing condition. If the PUSCH that meets the UCI multiplexing condition is associated with the PUCCH, UCI multiplexing is performed; if the PUSCH that meets the UCI multiplexing condition is not associated with the PUCCH, UCI multiplexing is not performed.

Within the range of PUSCHs that meet the UCI multiplexing condition, whether to perform UCI multiplexing and how to perform UCI multiplexing is determined according to the existing UCI transmission mechanism.

When simultaneous transmission is adopted for PUCCH, the following method may be used to determine the UCI multiplexing situation.

The UE multiplexes the UCI of at least 2 PUCCHs to the PUSCH, the PUSCH transmission opportunity or the PUSCH layer group that meets the multiplexing condition for transmission.

The UE makes the UCI be carried on the PUCCH for transmission without UCI multiplexing.

The UE determines whether to perform UCI multiplexing based on the association relationship between PUSCH and PUCCH and the UCI multiplexing condition. If the PUSCH that meets the UCI multiplexing condition is associated with the PUCCH, UCI multiplexing is performed; if the PUSCH that meets the UCI multiplexing condition is not associated with the PUCCH, UCI multiplexing is not performed.

Within the range of PUSCHs that meet the UCI multiplexing condition, whether to perform UCI multiplexing and how to perform UCI multiplexing is determined according to embodiment 2.

Please refer to FIG. 14, which is a schematic flow chart of a communication method provided in an embodiment of the present application. The first communication apparatus shown in FIG. 14 is, for example, the first communication apparatus 101 shown in FIG. 1, and the second communication apparatus is, for example, the second communication apparatus 102 shown in FIG. 1.

S1401, if the first communication apparatus is to send M first uplink channels and N second uplink channels on a first time domain resource, the first communication apparatus sends a target first uplink channel of the M first uplink channels. Correspondingly, the second communication apparatus receives the target first uplink channel of the M first uplink channels.

For the specific meanings of the first time domain resource, the first uplink channel and the second uplink channel, reference may be made to S201, and details will not be repeated here.

The first uplink channel includes (or carries) UCI, and the second uplink channel may carry uplink data.

In an embodiment of the present application, the first uplink channel includes UCI, and the UCI includes a positive scheduling request (Positive Scheduling Request, positive SR).

In a possible implementation, the first communication apparatus may also drop at least one second uplink channel of the N second uplink channels. dropping may be understood as that the first communication apparatus does not need to send the at least one second uplink channel to the second communication apparatus.

The at least one second uplink channel of the *N* second uplink channels is dropped. The at least one second uplink channel may be determined by the first communication apparatus. In cased where *M* and *N* take different values, the at least one second uplink channel determined to be dropped by the first communication apparatus may be different. The following describes the respective cases.

In a fourth case, *M* is equal to 1, and *N* is greater than or equal to 2, that is, the first communication apparatus is to send one first uplink channel and multiple second uplink channels on one first time domain resource.

In this case, there may be multiple methods for determining the at least one second uplink channel, which are described below.

In a first method of the fourth case, the first communication apparatus determines that at least one second uplink channel of the N second uplink channels does not carry uplink data, and then determines to drop the at least one second uplink channel.

In a second method of the fourth case, the first communication apparatus determines at least one second uplink channel corresponding to the *M* first uplink channels, and then drops at least one second uplink channel.

In a third method of the fourth case, the first communication apparatus determines at least one second uplink channel corresponding to the *M* first uplink channels, and if the first communication apparatus determines that the at least one second uplink channel does not carry uplink data, the first communication apparatus determines to drop the at least one second uplink channel.

If the first communication apparatus determines that the at least one second uplink channel carries uplink data, the uplink data that the at least one second uplink channel should carry is multiplexed to *K* second uplink channels other than the at least one second uplink channel in the *N* second uplink channels, and the at least one second uplink channel is dropped, where *K* is a positive integer less than *N.*

In particular, the first communication apparatus may also determine that the at least one second uplink channel corresponding to the *M* first uplink channels will not carry uplink data; or, the first communication apparatus does not expect the at least one second uplink channel corresponding to the *M* first uplink channels to carry uplink data.

Example 6: the first communication apparatus may determine at least one second uplink channel corresponding to the target first uplink channel based on the transmission parameters. For the specific meaning of the transmission parameters, reference may be made to S201, and details will not be repeated here.

For the modes in which the first communication apparatus determines the at least one second uplink channel corresponding to the target first uplink channel according to the transmission parameters, reference may be made to the above Modes 1 to 6, and details will not be repeated here.

Example 7: the first communication apparatus may also determine the at least one second uplink channel corresponding to the target first uplink channel according to the physical resources. The physical resources include frequency domain resources.

For the modes in which the first communication apparatus determines the at least one second uplink channel corresponding to the target first uplink channel according to the physical resources, reference may be made to the above Mode 7, and details will not be repeated here.

In a possible implementation, the first communication apparatus may also determine the at least one second uplink channel corresponding to the target first uplink channel according to transmission units, such as transmission points, beams, and antennas. Specifically, the first communication apparatus determines, from the *N* second uplink channels, second uplink channels that are located in the same transmission unit as the target first uplink channel, as the P second uplink channels.

Example 8: the first communication apparatus determines the at least one second uplink channel corresponding to the target first uplink channel according to the transmission parameters and the physical resources.

Under these two methods (the second method and the third method), the first communication apparatus may select any one or more of Modes 1 to 6 in combination with Mode 7 to determine the at least one second uplink channel corresponding to the target first uplink channel.

Under the second method and the third method mentioned above, the method in which the first communication apparatus determines the at least one second uplink channel corresponding to the target first uplink channel according to Example 6 to Example 8 may be configured by a protocol or configured by the second communication apparatus.

In a possible implementation, after the uplink data that the at least one second uplink channel should carry is multiplexed to the K second uplink channels, the K second uplink channels carrying the uplink data of the at least one second uplink channel are sent.

In a fifth case, *M* is greater than or equal to 2, and *N* is equal to 1, that is, the first communication apparatus is to send multiple first uplink channels and one second uplink channel on the first time domain resource.

In this case, the first communication apparatus may use some or all of the *M* first uplink channels as the target first uplink channels, where the first communication apparatus selecting which first uplink channels as the target first uplink channels may be specified by a protocol, or be randomly determined by the first communication apparatus according to the configuration by the second communication apparatus. Moreover, in this case, there are multiple methods for the first communication apparatus to drop a second uplink channel, which are described below respectively.

In a first method of the fifth case, the first communication apparatus determines that one second uplink channel does not carry uplink data, then drops the one second uplink channel and sends the target first uplink channel.

In a second method of the fifth case, the first communication apparatus determines that one second uplink channel is associated with any first uplink channel of the target first uplink channels, and the first second uplink channel does not carry uplink data, then the first communication apparatus drops the one second uplink channel. Or the first communication apparatus determines that one second uplink channel is associated with any first uplink channel of the target first uplink channels, then drops the one second uplink channel.

For the specific modes in which the first communication apparatus determines that the one second uplink channel is associated with any first uplink channel of the target first uplink channel, reference may be made to the above Modes 1 to 7, and details will not be repeated here.

In a sixth case, *M* is greater than or equal to 2, and *N* is greater than or equal to 2, that is, the first communication apparatus is to send multiple first uplink channels and multiple second uplink channels on the first time domain resource.

The first communication apparatus may take some or all of the M first uplink channels as the target first uplink channels. The following describes the modes of the first communication apparatus determining the second uplink channel for carrying UCI in cases where the number of target first uplink channels is different.

In a first sub-case of the sixth case, the number of target first uplink channels is 1.

In this case, for the method in which the first communication apparatus determines to drop the second uplink channel, reference may be made to the fourth case above, and details will not be repeated here.

In a second sub-case of the sixth case, the number of target first uplink channels is more than one.

The following mode in which each target first uplink channel of the multiple target first uplink channels is associated with at least one second uplink channel may be the same. For the modes of determining the at least one second uplink channel and a target first uplink channel, reference may be made to the content discussed above, and details will not be repeated here.

In the second sub-case, the at least one second uplink channel corresponding to one of any two target first uplink channels may be completely the same as, partially the same as, or completely different with the at least one second uplink channel corresponding to the other of the any two target first uplink channels, which is not specifically limited in the embodiments of the present application.

S1402, the second communication apparatus demodulates the target first uplink channel of the *M* first uplink channels to obtain the UCI of the target first uplink channel of the *M* first uplink channels.
1. For the fourth case above (i.e., *M* is equal to 1, and *N* is greater than or equal to 2).

In the fourth case above, the number of target first uplink channels is 1. The first communication apparatus sends one target first uplink channel. Accordingly, the second communication apparatus receives the one target first uplink channel. After the one target first uplink channel is demodulated, one piece of UCI can be obtained. The UCI includes a positive scheduling request.

In a possible implementation, the first communication apparatus also sends *K* second uplink channels, and the *K* second uplink channels carry uplink data of the at least one second uplink channel corresponding to the target first uplink channel. Accordingly, the second communication apparatus receives the *K* second uplink channels, and demodulates the *K* second uplink channels to obtain at least one piece of uplink data. For the modes in which the second communication apparatus determines the at least one second uplink channel corresponding to the target first uplink channel, reference may be correspondingly made to the content discussed above, and details will not be repeated here. The mode in which the second communication apparatus determines the at least one second uplink channel corresponding to each target first uplink channel may be configured by the first communication apparatus, or by a protocol.

2. For the fifth case above (i.e., *M* is greater than or equal to 2, and *N* is equal to 1).

2-1. In the fifth case and the number of target first uplink channels is one.

For the content of the second communication apparatus obtaining one piece of UCI, reference may be made to the content discussed in the above, and details will not be repeated here.

2-2. In the fifth case and the number of target first uplink channels is more than one.

The first communication apparatus sends multiple target first uplink channels. Correspondingly, the second communication apparatus receives the multiple second uplink channels, and demodulates the multiple second uplink channels to obtain multiple pieces of UCI. For the specific content of the second communication apparatus obtaining multiple pieces of UCI, reference may be made to the content discussed in the above, and details will not be repeated here.

In addition, if transmission of the multiple target first uplink channels is repeated transmission, the second communication apparatus may jointly demodulate the multiple pieces of UCI and finally obtain one piece of UCI. For the specific content of the joint demodulation, reference may be made to the content discussed in the above, and details will not be repeated here.

3. For the sixth case mentioned above (i.e., *M* is greater than or equal to 2, and *N* is equal to 1).

3-1. In the first sub-case of the sixth case and the number of target first uplink channels is 1.

In this case, the content of the second communication apparatus obtaining one piece of UCI is the same as that of the fourth case, and reference may be made to the content discussed in the fourth case above, which will not be repeated here.

3-2. In the second sub-case of the sixth case and the number of target first uplink channels is more than one.

The second communication apparatus receives these multiple target first uplink channels, and demodulates these multiple target first uplink channels to obtain multiple pieces of UCI.

If transmission of these multiple target first uplink channels is repeated transmission, the second communication apparatus may jointly demodulate these multiple pieces of UCI and finally obtain one piece of UCI. For the specific content of the joint demodulation, reference may be made to the content discussed in the above, and details will not be repeated here.

In the embodiments of the present application, in the case where the first uplink channels and the second uplink channels are to be sent within the first time domain resource, the first communication apparatus can determine that a priority of the positive scheduling request included in the UCI corresponding to the first uplink channel is higher than the uplink data that should be carried on the second uplink channel. Therefore, the first communication apparatus drops the second uplink channels to ensure the accurate transmission of the first uplink channels, so as to avoid the second communication apparatus not receiving the UCI including the positive scheduling request.

Below, an example in which the first uplink channel is a PUCCH, the second uplink channel is a PUSCH, and UCI is used to carry a positive scheduling request is taken to illustrate the communication method of the embodiments of the present application.
1. UCI transmission for single transmission of PUCCH carrying positive SR.

If transmission of the PUCCH is single transmission, and two or more PUSCHs overlapping with the PUCCH do not carry data, transmission of the two or more PUSCH may be dropped.

If transmission of the PUCCH is single transmission, and one or more PUSCHs of the PUSCHs overlapping with the PUCCH carry data while other PUSCHs do not carry data, when the PUSCH associated with the PUCCH carrying the positive SR does not carry data, the PUSCH associated with the positive SR is dropped; when one or more PUSCHs do not carry data, the terminal determines that the PUSCH associated with the positive SR does not carry data.

The UE does not expect the PUSCH associated with the PUCCH carrying the positive SR to carry data.

2. UCI transmission for simultaneous transmission of PUCCH carrying positive SR.

For each PUCCH, whether to drop UCI or drop PUSCH is determined.

According to the association relationship between PUCCH and PUSCH, whether to drop UCI or drop PUSCH is determined within the range of associated PUCCHs and PUSCHs.

According to the existing UCI transmission mechanism, when the PUCCH carrying the positive SR overlaps with the PUSCH that does not carry data, the PUSCH is dropped and the PUCCH carrying the positive SR is transmitted. When transmission of PUCCH and/or PUSCH is repeated transmission or simultaneous transmission, the overlapping situation will be more complicated. Examples are as follows.

Case (case) 1: when performing repeated transmission or simultaneous transmission of PUSCH, if the PUSCHs sent at two or more PUSCH transmission opportunities do not carry data, when simultaneous/repeated transmission of positive SR and PUSCH overlaps (PUSCH is transmitted by FDM or SDM), transmission of the two or more PUSCHs may be dropped to ensure the correct transmission of the positive SR.

Case 2: when performing repeated transmission or simultaneous transmission of PUSCH, such as the transmission of PUSCH by FDM or SDM scheduled by M-DCI, or non-repeated transmission scheduled by S-DCI, one or more PUSCHs may carry data, and other PUSCHs may not carry data. Assuming that multiple PUSCHs overlap with the positive SR, possible transmission methods are as follows.

Method *A*: if the PUSCH associated with the PUCCH carrying the positive SR (see embodiments 1 and 2 for the association methods) does not carry data, drop the PUSCH associated with the positive SR, and only transmit the PUCCH carrying the positive SR.

Method *B*: the UE does not expect the PUSCH associated with the PUCCH carrying the positive SR to carry data.

Case 3: when performing simultaneous transmission of PUCCH, if at least one PUCCH transmission opportunity or PUCCH resource carries a positive SR and overlaps with single transmission or simultaneous transmission of PUSCH, UCI transmission may be determined according to at least one of the following methods.

Method *A*: for each PUCCH transmission opportunity or PUCCH resource, determine which of Case 1 to Case 3 it belongs to, and execute the corresponding transmission method.

Method *B*: determine the association relationship between PUCCH and PUSCH according to Example B, and determine whether to drop PUSCH within the range of the associated PUCCHs and PUSCHs.

In each of the above Cases, if only part of the PUSCH transmission opportunities or PUSCH layer groups in the corresponding PUSCHs meet the UCI multiplexing condition, how to drop PUSCH may be determined according to the method in Example *C.*

The UE is, for example, the first communication apparatus, and the network side is, for example, the second communication apparatus.

In all embodiments of the present application, the overlap of two channels means that the two channels overlap on at least one symbol.

It should be noted that the first uplink channels and the second uplink channels in the embodiments of the present application are physical channels in a same service cell, and all the above modes are applicable to both dynamic scheduling and CG scheduling.

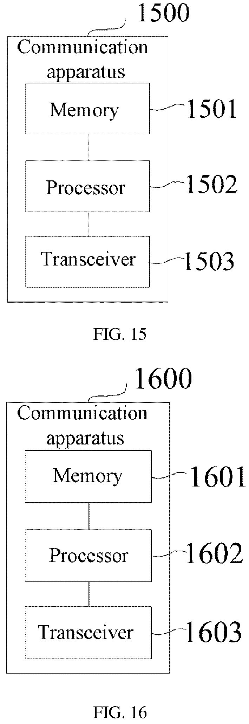

Please refer to FIG. 15, which is a schematic structural diagram of a communication apparatus provided in an embodiment of the present application. As shown in FIG. 15, the communication apparatus 1500 includes a memory 1501, a processor 1502 and a transceiver 1503. The communication apparatus 1500 may be configured to implement the functions of the first communication apparatus described above. The memory 1501 is configured to store program instructions, and the processor 1502 is configured to read the program in the memory to execute any of the communication methods executed by the first network element discussed above. The transceiver 1503 may be specifically configured to transmit and receive information under the control of the processor 1502.

Exemplarily, the processor 1502 is configured to read the program in the memory and execute the following process:
if *M* first uplink channels and *N* second uplink channels are to be sent on the first time domain resource, determine to multiplex UCI corresponding to a target first uplink channel of the M first uplink channels to at least one second uplink channel of the N second uplink channels for transmission, and send the at least one second uplink channel carrying the UCI; or, if *M* first uplink channels and *N* second uplink channels are to be sent on a first time domain resource, drop at least one second uplink channel of the *N* second uplink channels, and/or, send a target first uplink channel of the *M* first uplink channels which corresponds to the at least one second uplink channel; or, if *M* first uplink channels and *N* second uplink channels are to be sent on a first time domain resource, determine, from the *N* second uplink channels, at least one second uplink channel corresponding to a target first uplink channel of the *M* first uplink channels, and send or drop the at least one second uplink channel corresponding to the target first uplink channel of the *M* first uplink channels; where *M* and *N* are not 1 simultaneously, and both *M* and *N* are integers greater than or equal to 1.

In a possible implementation, the at least one second uplink channel and the target first uplink channel have same information on a transmission parameter and/or same information on a physical resource, and the transmission parameter is a higher-layer parameter corresponding to transmission of an uplink channel.

In a possible implementation, the processor 1502 is specifically configured to: in a case where one or more first conditions are met, multiplex the UCI corresponding to the target first uplink channel of the *M* first uplink channels to the at least one second uplink channel of the *N* second uplink channels for transmission;
where the first conditions include: the at least one second uplink channel and the target first uplink channel have a same index or state of a transmission configuration indication; or, the at least one second uplink channel and the target first uplink channel are both associated with a same control-resource-set related higher-layer parameter; or, there is an overlap between a frequency domain resource of the at least one second uplink channel and a frequency domain resource of the target first uplink channel; or, the at least one second uplink channel and the target first uplink channel are both indicated by same DCI; or, an index of an RB of the at least one second uplink channel meets a second condition; or, a resource of the at least one second uplink channel is associated with a resource or a resource group corresponding to the target first uplink channel.

In a possible implementation, the control-resource-set related higher-layer parameter includes CORESETPoolIndex, and the at least one second uplink channel and the target first uplink channel being both associated with the same control-resource-set related higher-layer parameter includes: the at least one second uplink channel and the target first uplink channel are both associated with a value of the same control-resource-set related higher-layer parameter; or, DCI for scheduling the at least one second uplink channel and DCI for scheduling the target first uplink channel are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a possible implementation, at least two first uplink channels of the *M* first uplink channels carry same information; and/or, at least two second uplink channels of the N second uplink channels carry same information.

In a possible implementation, the target first uplink channel is the *M* first uplink channels; the processor 1502 is further configured to: determine to multiplex UCI corresponding to each first uplink channel of the *M* first uplink channels to at least one second uplink channel of the *N* second uplink channels for transmission.

In a possible implementation, the processor 1502 is further configured to: simultaneously or sequentially determine to multiplex the UCI corresponding to each first uplink channel of the *M* first uplink channels to the at least one second uplink channel of the *N* second uplink channels for transmission.

In a possible implementation, at least one second uplink channel corresponding to one of any two first uplink channels of the *M* first uplink channels is same as or different from at least one second uplink channel corresponding to the other of the any two first uplink channels of the *M* first uplink channels.

In a possible implementation, the processor 1502 is further configured to: after determining to multiplex the UCI corresponding to the target first uplink channel of the *M* first uplink channels to the at least one second uplink channel of the *N* second uplink channels for transmission, delete or update first information, where the first information includes a serial number of the at least one second uplink channel.

In a possible implementation, the processor 1502 is further configured to: determine that the at least one second uplink channel has an ability to carry the UCI; and/or, determine that a time difference between an instant at which the at least one second uplink channel is sent and an instant at which the target first uplink channel is sent is less than or equal to a first time difference.

In a possible implementation, the processor 1502 is specifically configured to: in a case where one or more first conditions are met, drop the at least one second uplink channel of the *N* second uplink channels;
where the first conditions include: the at least one second uplink channel and the target first uplink channel have a same index or state of a transmission configuration indication; or, the at least one second uplink channel and the target first uplink channel are both associated with a same control-resource-set related higher-layer parameter; or, there is an overlap between a frequency domain resource of the at least one second uplink channel and a frequency domain resource of the target first uplink channel; or, the at least one second uplink channel and the target first uplink channel are both indicated by same DCI; or, an index of an RB of the at least one second uplink channel meets a second condition; or, a resource of the at least one second uplink channel is associated with a resource or a resource group corresponding to the target first uplink channel.

In a possible implementation, the control-resource-set related higher-layer parameter includes CORESETPoolIndex, and the at least one second uplink channel and the target first uplink channel of the *M* first uplink channels being both associated with the same control-resource-set related higher-layer parameter includes: the at least one second uplink channel and the target first uplink channel of the *M* first uplink channels are both associated with a value of the same control-resource-set related higher-layer parameter; or, DCI for scheduling the at least one second uplink channel and DCI for scheduling the target first uplink channel of the *M* first uplink channels are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a possible implementation, at least two first uplink channels of the *M* first uplink channels carry same information; and/or, at least two second uplink channels of the N second uplink channels carry same information.

In a possible implementation, at least one second uplink channel corresponding to one of any two first uplink channels of the *M* first uplink channels is same as or different from at least one second uplink channel corresponding to the other of the any two first uplink channels of the *M* first uplink channels.

In a possible implementation, the processor 1502 is specifically configured to: in a case where one or more first conditions are met, send or drop the at least one second uplink channel which is determined from the *N* second uplink channels and corresponds to the target first uplink channel of the *M* first uplink channels;
where the first conditions include: determining, from the *N* second uplink channels, at least one second uplink channel which has a same index or state of a transmission configuration indication as the target first uplink channel; or, determining, from the *N* second uplink channels, at least one second uplink channel which is associated with a same control-resource-set related higher-layer parameter as the target first uplink channel; or, determining, from the *N* second uplink channels, at least one second uplink channel of which a frequency domain resource overlaps with a frequency domain resource of the target first uplink channel; or, determining, from the *N* second uplink channels, at least one second uplink channel which is indicated by same DCI as the target first uplink channel; or, determining, from the *N* second uplink channels, at least one second uplink channel of which an index of an RB meets a second condition; or, determining, from the *N* second uplink channels, at least one second uplink channel of which a resource is associated with a resource or a resource group corresponding to the target first uplink channel.

In a possible implementation, the control-resource-set related higher-layer parameter includes CORESETPoolIndex, and the determining, from the N second uplink channels, the at least one second uplink channel which is associated with the same control-resource-set related higher-layer parameter as the target first uplink channel includes: determining, from the *N* second uplink channels, at least one second uplink channel which is associated with a value of the same control-resource-set related higher-layer parameter as the target first uplink channel; or, determining, from the *N* second uplink channels, at least one second uplink channel, where DCI for scheduling the at least one second uplink channel and DCI for scheduling the target first uplink channel are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a possible implementation, at least two first uplink channels of the *M* first uplink channels carry same information; and/or, at least two second uplink channels of the N second uplink channels carry same information.

In a possible implementation, at least one second uplink channel corresponding to one of any two first uplink channels of the M first uplink channels is same as or different from at least one second uplink channel corresponding to the other of the any two first uplink channels of the *M* first uplink channels

In a possible implementation, the UCI corresponding to the target first uplink channel includes a hybrid automatic repeat request, channel state information, or a positive scheduling request.

In a possible implementation, the first uplink channels are physical uplink control channels; the second uplink channels are physical uplink shared channels.

Please refer to FIG. 16, which is a schematic structural diagram of a communication apparatus provided in an embodiment of the present application. As shown in FIG. 16, the communication apparatus 1600 includes a memory 1601, a processor 1602, and a transceiver 1603. The communication apparatus 1600 may be configured to implement the functions of the second communication apparatus described above. The memory 1601 is configured to store program instructions, and the processor 1602 is used to read the program in the memory to execute any of the communication methods performed by the first network element discussed above. The transceiver 1603 may be specifically configured to transmit and receive information under the control of the processor 1602.

Exemplarily, the processor 1602 is configured to read the program in the memory and execute the following process:
if a first communication apparatus is to send *M* first uplink channels and *N* second uplink channels on a first time domain resource: receive at least one second uplink channel on the first time domain resource, where the at least one second uplink channel is used to carry UCI; demodulate the at least one second uplink channel to obtain at least one piece of UCI, where information included in each of the at least one piece of UCI is same, or, information included in each of the at least one piece of UCI is different; or,
if a first communication apparatus is to send *M* first uplink channels and *N* second uplink channels on first time domain resource, and the first communication apparatus drops at least one second uplink channel of the N second uplink channels, and/or, sends a target first uplink channel of the *M* first uplink channels which corresponds to the at least one second uplink channel: receive, within the first time domain resource, the target first uplink channel corresponding to the at least one second uplink channel, and demodulate the target first uplink channel to obtain UCI; or,
if a first communication apparatus is to send *M* first uplink channels and *N* second uplink channels on a first time domain resource, and the first communication apparatus determines at least one second uplink channel corresponding to a target first uplink channel of the *M* first uplink channels from the *N* second uplink channels, and sends or drops the at least one second uplink channel corresponding to the target first uplink channel of the *M* first uplink channels: receive the at least one second uplink channel within the first time domain resource;
where *M* and *N* are not 1 simultaneously, and both *M* and *N* are integers greater than or equal to 1.

In a possible implementation, the at least one second uplink channel and the target first uplink channel have same information on a transmission parameter and/or same information on a physical resource, and the transmission parameter is a higher-layer parameter corresponding to transmission of an uplink channel.

In a possible implementation, the at least one second uplink channel meets a first condition, and the first condition includes: the at least one second uplink channel and the target first uplink channel have a same index or state of a transmission configuration indication; or, the at least one second uplink channel and the target first uplink channel are both associated with a same control-resource-set related higher-layer parameter; or, there is an overlap between a frequency domain resource of the at least one second uplink channel and a frequency domain resource of the target first uplink channel; or, the at least one second uplink channel and the target first uplink channel are both indicated by same DCI; or, an index of an RB of the at least one second uplink channel meets a second condition; or, a resource of the at least one second uplink channel is associated with a resource or a resource group corresponding to the target first uplink channel.

In a possible implementation, the control-resource-set related higher-layer parameter includes CORESETPoolIndex, and the at least one second uplink channel and the target first uplink channel being both associated with the same control-resource-set related higher-layer parameter includes: the at least one second uplink channel and the target first uplink channel are both associated with a value of the same control-resource-set related higher-layer parameter; or, DCI for scheduling the at least one second uplink channel and DCI for scheduling the target first uplink channel are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a possible implementation, the processor 1602 is further configured to: simultaneously or sequentially receive the at least one second uplink channel.

In a possible implementation, the processor 1602 is further configured to: when sequentially receiving the at least one second uplink channel, delete or update first information, where the first information includes a serial number of the at least one second uplink channel.

In a possible implementation, the processor 1602 is further configured to: determine that the at least one second uplink channel has an ability to carry the UCI; and/or determine that a time difference between an instant at which the at least one second uplink channel is sent and an instant at which the target first uplink channel is sent is less than or equal to a first time difference.

In a possible implementation, dropping the at least one second uplink channel of the *N* second uplink channels includes: in a case where one or more first conditions are met, dropping the at least one second uplink channel of the *N* second uplink channels;
where the first conditions include: the at least one second uplink channel and the target first uplink channel have a same index or state of a transmission configuration indication; or, the at least one second uplink channel and the target first uplink channel are both associated with a same control-resource-set related higher-layer parameter; or, there is an overlap between a frequency domain resource of the at least one second uplink channel and a frequency domain resource of the target first uplink channel; or, the at least one second uplink channel and the target first uplink channel are both indicated by same DCI; or, an index of an RB of the at least one second uplink channel meets a second condition; or, a resource of the at least one second uplink channel is associated with a resource or a resource group corresponding to the target first uplink channel.

In a possible implementation, the control-resource-set related higher-layer parameter includes CORESETPoolIndex, and the at least one second uplink channel and the target first uplink channel of the M first uplink channels being both associated with the same control-resource-set related higher-layer parameter includes: the at least one second uplink channel and the target first uplink channel are both associated with a value of the same control-resource-set related higher-layer parameter; or, DCI for scheduling the at least one second uplink channel and DCI for scheduling the target first uplink channel of the *M* first uplink channels are both associated with the same control-resource-set related higher-layer parameter.

In a possible implementation, the second condition includes: the index of the RB of the at least one second uplink channel is a smallest index among indexes of RBs of multiple second uplink channels of the N second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a possible implementation, determining, from the N second uplink channels, the at least one second uplink channel corresponding to the target first uplink channel of the M first uplink channels, and sending or dropping the at least one second uplink channel corresponding to the target first uplink channel of the *M* first uplink channels include: in a case where one or more first conditions are met, sending or dropping the at least one second uplink channel which is determined from the *N* second uplink channels and corresponds to the target first uplink channel of the *M* first uplink channels;
where the first conditions include: determining, from the *N* second uplink channels, at least one second uplink channel which has a same index or state of a transmission configuration indication as the target first uplink channel; or, determining, from the *N* second uplink channels, at least one second uplink channel which is associated with a same control-resource-set related higher-layer parameter as the target first uplink channel; or, determining, from the *N* second uplink channels, at least one second uplink channel of which a frequency domain resource overlaps with a frequency domain resource of the target first uplink channel; or, determining, from the *N* second uplink channels, at least one second uplink channel which is indicated by same DCI as the target first uplink channel; or, determining, from the *N* second uplink channels, at least one second uplink channel of which an index of an RB meets a second condition; or, determining, from the *N* second uplink channels, at least one second uplink channel of which a resource is associated with a resource or a resource group corresponding to the target first uplink channel.

In a possible implementation, the control-resource-set related higher-layer parameter includes CORESETPoolIndex, and the determining, from the *N* second uplink channels, the at least one second uplink channel which is associated with the same control-resource-set related higher-layer parameter as the target first uplink channel includes: determining, from the *N* second uplink channels, at least one second uplink channel which is associated with a value of the same control-resource-set related higher-layer parameter as the target first uplink channel; or, determining, from the *N* second uplink channels, at least one second uplink channel, where DCI for scheduling the at least one second uplink channel and DCI for scheduling the target first uplink channel are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

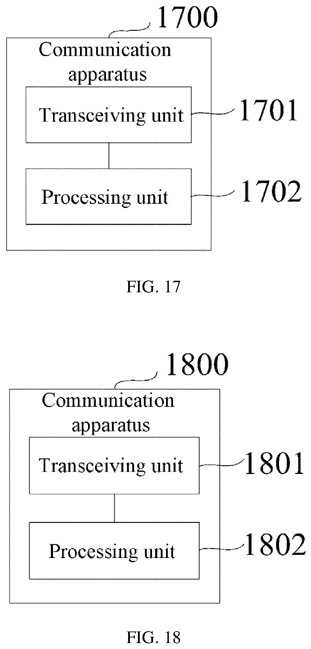

Please refer to FIG. 17, which is a schematic structural diagram of a communication apparatus provided in an embodiment of the present application. As shown in FIG. 17, the communication apparatus 1700 includes a transceiving unit 1701 and a processing unit 1702. The communication apparatus 1700 may be configured to implement the functions of the first communication apparatus described above.

Exemplarily, the transceiving unit 1701 is configured to: send at least one second uplink channel carrying UCI; or, send a target first uplink channel of *M* first uplink channels which corresponds to at least one second uplink channel; or, send at least one second uplink channel corresponding to a target first uplink channel of *M* first uplink channels.

The processing unit 1702 is configured to: if *M* first uplink channels and *N* second uplink channels are to be sent on a first time domain resource, determine to multiplex UCI corresponding to a target first uplink channel of the *M* first uplink channels to at least one second uplink channel of the *N* second uplink channels for transmission; or if *M* first uplink channels and *N* second uplink channels are to be sent on a first time domain resource, drop at least one second uplink channel of the *N* second uplink channels, or, a target first uplink channel of the uplink channels which corresponds to the at least one second uplink channel; or, if *M* first uplink channels and *N* second uplink channels are to be sent on a first time domain resource, determine, from the *N* second uplink channels, at least one second uplink channel corresponding to a target first uplink channel of the *M* first uplink channels, and drop the at least one second uplink channel corresponding to the target first uplink channel of the *M* first uplink channels; where *M* and *N* are not 1 simultaneously, and both *M* and *N* are integers greater than or equal to 1.

In a possible implementation, the at least one second uplink channel and the target first uplink channel have same information on a transmission parameter and/or same information on a physical resource, and the transmission parameter is a higher-layer parameter corresponding to transmission of an uplink channel.

In a possible implementation, the processing unit 1702 is specifically configured to: in a case where one or more first conditions are met, multiplex the UCI corresponding to the target first uplink channel of the *M* first uplink channels to the at least one second uplink channel of the *N* second uplink channels for transmission;
where the first conditions include: the at least one second uplink channel and the target first uplink channel have a same index or state of a transmission configuration indication; or, the at least one second uplink channel and the target first uplink channel are both associated with a same control-resource-set related higher-layer parameter; or, there is an overlap between a frequency domain resource of the at least one second uplink channel and a frequency domain resource of the target first uplink channel; or, the at least one second uplink channel and the target first uplink channel are both indicated by same DCI; or, an index of an RB of the at least one second uplink channel meets a second condition; or, a resource of the at least one second uplink channel is associated with a resource or a resource group corresponding to the target first uplink channel.

In a possible implementation, the control-resource-set related higher-layer parameter includes CORESETPoolIndex, and the at least one second uplink channel and the target first uplink channel being both associated with the same control-resource-set related higher-layer parameter includes: the at least one second uplink channel and the target first uplink channel are both associated with a value of the same control-resource-set related higher-layer parameter; or, DCI for scheduling the at least one second uplink channel and DCI for scheduling the target first uplink channel are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a possible implementation, at least two first uplink channels of the *M* first uplink channels carry same information; and/or, at least two second uplink channels of the *N* second uplink channels carry same information.

In a possible implementation, the target first uplink channel is the *M* first uplink channels; the processing unit 1702 is further configured to: determine to multiplex UCI corresponding to each first uplink channel of the *M* first uplink channels to at least one second uplink channel of the *N* second uplink channels for transmission.

In a possible implementation, the processing unit 1702 is further configured to: simultaneously or sequentially determine to multiplex the UCI corresponding to each first uplink channel of the *M* first uplink channels to the at least one second uplink channel of the *N* second uplink channels for transmission.

In a possible implementation, at least one second uplink channel corresponding to one of any two first uplink channels of the *M* first uplink channels is same as or different from at least one second uplink channel corresponding to the other of the any two first uplink channels of the *M* first uplink channels.

In a possible implementation, the processing unit 1702 is further configured to: after determining to multiplex the UCI corresponding to the target first uplink channel of the *M* first uplink channels to the at least one second uplink channel of the *N* second uplink channels for transmission, delete or update first information, where the first information includes a serial number of the at least one second uplink channel.

In a possible implementation, the processing unit 1702 is further configured to: determine that the at least one second uplink channel has an ability to carry the UCI; and/or, determine that a time difference between an instant at which the at least one second uplink channel is sent and an instant at which the target first uplink channel is sent is less than or equal to a first time difference.

In a possible implementation, the processing unit 1702 is specifically configured to: in a case where one or more first conditions are met, drop the at least one second uplink channel of the *N* second uplink channels;
where the first conditions include: the at least one second uplink channel and the target first uplink channel have a same index or state of a transmission configuration indication; or, the at least one second uplink channel and the target first uplink channel are both associated with a same control-resource-set related higher-layer parameter; or, there is an overlap between a frequency domain resource of the at least one second uplink channel and a frequency domain resource of the target first uplink channel; or, the at least one second uplink channel and the target first uplink channel are both indicated by same DCI; or, an index of an RB of the at least one second uplink channel meets a second condition; or, a resource of the at least one second uplink channel is associated with a resource or a resource group corresponding to the target first uplink channel.

In a possible implementation, the control-resource-set related higher-layer parameter includes CORESETPoolIndex, and the at least one second uplink channel and the target first uplink channel being both associated with the same control-resource-set related higher-layer parameter includes: the at least one second uplink channel and the target first uplink channel are both associated with a value of the same control-resource-set related higher-layer parameter; or, DCI for scheduling the at least one second uplink channel and DCI for scheduling the target first uplink channel are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the N second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a possible implementation, at least two first uplink channels of the M first uplink channels carry same information; and/or, at least two second uplink channels of the N second uplink channels carry same information.

In a possible implementation, at least one second uplink channel corresponding to one of any two first uplink channels of the *M* first uplink channels is same as or different from at least one second uplink channel corresponding to the other of the any two first uplink channels of the *M* first uplink channels.

In a possible implementation, the processing unit 1702 is specifically configured to: in a case where one or more first conditions are met, send or drop the at least one second uplink channel which is determined from the *N* second uplink channels and corresponds to the target first uplink channel of the *M* first uplink channels;
where the first conditions include: determining, from the *N* second uplink channels, at least one second uplink channel which has a same index or state of a transmission configuration indication as the target first uplink channel; or, determining, from the N second uplink channels, at least one second uplink channel which is associated with a same control-resource-set related higher-layer parameter as the target first uplink channel; or, determining, from the *N* second uplink channels, at least one second uplink channel of which a frequency domain resource overlaps with a frequency domain resource of the target first uplink channel; or, determining, from the *N* second uplink channels, at least one second uplink channel which is indicated by same DCI as the target first uplink channel; or, determining, from the *N* second uplink channels, at least one second uplink channel of which an index of an RB meets a second condition; or, determining, from the *N* second uplink channels, at least one second uplink channel of which a resource is associated with a resource or a resource group corresponding to the target first uplink channel.

In a possible implementation, the control-resource-set related higher-layer parameter includes CORESETPoolIndex, and the determining, from the *N* second uplink channels, the at least one second uplink channel which is associated with the same control-resource-set related higher-layer parameter as the target first uplink channel includes: determining, from the *N* second uplink channels, at least one second uplink channel which is associated with a value of the same control-resource-set related higher-layer parameter as the target first uplink channel; or, determining, from the *N* second uplink channels, at least one second uplink channel, where DCI for scheduling the at least one second uplink channel and DCI for scheduling the target first uplink channel are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a possible implementation, at least two first uplink channels of the *M* first uplink channels carry same information; and/or, at least two second uplink channels of the N second uplink channels carry same information.

In a possible implementation, at least one second uplink channel corresponding to one of any two first uplink channels of the *M* first uplink channels is same as or different from at least one second uplink channel corresponding to the other of the any two first uplink channels of the *M* first uplink channels.

In a possible implementation, the UCI corresponding to the target first uplink channel includes a hybrid automatic repeat request, channel state information, or a positive scheduling request.

In a possible implementation, the first uplink channels are physical uplink control channels; the second uplink channels are physical uplink shared channels.

As an example, the transceiving unit 1701 in the embodiment of the present application may implement the functions of the transceiver 1503 in FIG. 15 above. The processing unit 1702 is configured to implement the functions of the processor 1502 in FIG. 15 above.

Please refer to FIG. 18, which is a schematic structural diagram of a communication apparatus provided in an embodiment of the present application. As shown in FIG. 18, the communication apparatus 1800 includes a transceiving unit 1801 and a processing unit 1802. The communication apparatus 1800 may be configured to implement the functions of the second communication apparatus described above.

Exemplarily, the transceiving unit 1801 is configured to: receive at least one second uplink channel on a first time domain resource, where the at least one second uplink channel is used to carry UCI; or, receive a target first uplink channel corresponding to the at least one second uplink channel within a first time domain resource; or, receive at least one second uplink channel within a first time domain resource.

The processing unit 1802 is configured to: demodulate the at least one second uplink channel to obtain at least one piece of UCI, where information included in each of the at least one piece of UCI is same, or, information included in each of the at least one piece of UCI is different; or, demodulate the target first uplink channel to obtain UCI.

*M* and *N* are not 1 simultaneously, and both *M* and *N* are integers greater than or equal to 1.

In a possible implementation, the at least one second uplink channel and the target first uplink channel have same information on a transmission parameter and/or same information on a physical resource, and the transmission parameter is a higher-layer parameter corresponding to transmission of an uplink channel.

In a possible implementation, at least one second uplink channel meets a first condition, and the first condition includes: the at least one second uplink channel and the target first uplink channel have a same index or state of a transmission configuration indication; or, the at least one second uplink channel and the target first uplink channel are both associated with a same control-resource-set related higher-layer parameter; or, there is an overlap between a frequency domain resource of the at least one second uplink channel and a frequency domain resource of the target first uplink channel; or, the at least one second uplink channel and the target first uplink channel are both indicated by same DCI; or, an index of an RB of the at least one second uplink channel meets a second condition; or, a resource of the at least one second uplink channel is associated with a resource or a resource group corresponding to the target first uplink channel.

In a possible implementation, the control-resource-set related higher-layer parameter includes CORESETPoolIndex, and the at least one second uplink channel and the target first uplink channel being both associated with the same control-resource-set related higher-layer parameter includes: the at least one second uplink channel and the target first uplink channel are both associated with a value of the same control-resource-set related higher-layer parameter; or, DCI for scheduling the at least one second uplink channel and DCI for scheduling the target first uplink channel are both associated with the same control-resource-set related higher-layer parameter.

In a possible implementation, the second condition includes: the index of the RB of the at least one second uplink channel is a smallest index among indexes of RBs of multiple second uplink channels of the N second uplink channels; or, the index of the RB of the at least one second uplink channel is a largest index among indexes of RBs of multiple second uplink channels of the N second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a possible implementation, the processing unit 1802 is further configured to: simultaneously or sequentially receive the at least one second uplink channel.

In a possible implementation, the processing unit 1802 is further configured to: when sequentially receiving the at least one second uplink channel, delete or update first information, where the first information includes a serial number of the at least one second uplink channel.

In a possible implementation, the processing unit 1802 is further configured to: determine that the at least one second uplink channel has an ability to carry the UCI; and/or determine that a time difference between an instant at which the at least one second uplink channel is sent and an instant at which the target first uplink channel is sent is less than or equal to a first time difference.

In a possible implementation, dropping the at least one second uplink channel of the N second uplink channels includes: in a case where one or more first conditions are met, dropping the at least one second uplink channel of the N second uplink channels;
where the first conditions include: the at least one second uplink channel and the target first uplink channel have a same index or state of a transmission configuration indication; or, the at least one second uplink channel and the target first uplink channel are both associated with a same control-resource-set related higher-layer parameter; or, there is an overlap between a frequency domain resource of the at least one second uplink channel and a frequency domain resource of the target first uplink channel; or, the at least one second uplink channel and the target first uplink channel are both indicated by same DCI; or, an index of an RB of the at least one second uplink channel meets a second condition; or, a resource of the at least one second uplink channel is associated with a resource or a resource group corresponding to the target first uplink channel.

In a possible implementation, the control-resource-set related higher-layer parameter includes CORESETPoolIndex, and the at least one second uplink channel and the target first uplink channel being both associated with the same control-resource-set related higher-layer parameter includes: the at least one second uplink channel and the target first uplink channel are both associated with a value of the same control-resource-set related higher-layer parameter; or, DCI for scheduling the at least one second uplink channel and DCI for scheduling the target first uplink channel of the *M* first uplink channels are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

In a possible implementation, determining, from the *N* second uplink channels, the at least one second uplink channel corresponding to the target first uplink channel of the *M* first uplink channels, and sending or dropping the at least one second uplink channel corresponding to the target first uplink channel of the *M* first uplink channels include: in a case where one or more first conditions are met, sending or dropping the at least one second uplink channel which is determined from the *N* second uplink channels and corresponds to the target first uplink channel of the *M* first uplink channels;
where the first conditions include: determining, from the *N* second uplink channels, at least one second uplink channel which has a same index or state of a transmission configuration indication as the target first uplink channel; or, determining, from the *N* second uplink channels, at least one second uplink channel which is associated with a same control-resource-set related higher-layer parameter as the target first uplink channel; or, determining, from the *N* second uplink channels, at least one second uplink channel of which a frequency domain resource overlaps with a frequency domain resource of the target first uplink channel; or, determining, from the *N* second uplink channels, at least one second uplink channel which is indicated by same DCI as the target first uplink channel; or, determining, from the *N* second uplink channels, at least one second uplink channel of which an index of an RB meets a second condition; or, determining, from the *N* second uplink channels, at least one second uplink channel of which a resource is associated with a resource or a resource group corresponding to the target first uplink channel.

In a possible implementation, the control-resource-set related higher-layer parameter includes CORESETPoolIndex, and the determining, from the *N* second uplink channels, the at least one second uplink channel which is associated with the same control-resource-set related higher-layer parameter as the target first uplink channel includes: determining, from the *N* second uplink channels, at least one second uplink channel which is associated with a value of the same control-resource-set related higher-layer parameter as the target first uplink channel; or, determining, from the *N* second uplink channels, at least one second uplink channel, where DCI for scheduling the at least one second uplink channel and DCI for scheduling the target first uplink channel are both associated with the same control-resource-set related higher-layer parameter.

In a possible implementation, the second condition includes: the index of the RB of the at least one second uplink channel is a smallest index among indexes of RBs of multiple second uplink channels of the *N* second uplink channels; or, the index of the RB of the at least one second uplink channel is a largest index among indexes of RBs of multiple second uplink channels of the *N* second uplink channels; or, a relative index of the RB of the at least one second uplink channel is same as a relative index of the target first uplink channel; or, the index of the RB of each of the at least one second uplink channel is greater than a first threshold; or, the index of the RB of each of the at least one second uplink channel is less than a first threshold; or, the index of the RB of each of the at least one second uplink channel is an even number; or, the index of the RB of each of the at least one second uplink channel is an odd number.

As an example, the processing unit 1802 in the embodiment of the present application may implement the functions of the transceiver 1603 in FIG. 16 above. The processing unit 1802 is configured to implement the functions of the processor 1602 in FIG. 16 above.

It should be noted that the division of units in the embodiments of the present application, which is only a logical function division, is for illustrative purposes, and there may be other division manners in actual implementation. In addition, the functional units in the embodiments of the present application may be integrated into one processing unit, or each unit may be physically separate, or two or more units may be integrated into one unit. The above-mentioned integrated unit may be implemented in the form of hardware or in the form of software functional units.

The present application embodiment provides a communication system, which includes the communication apparatus 1500 as shown in FIG. 15 and the communication apparatus 1600 as shown in FIG. 16. For the content of the communication apparatus 1500 and the communication apparatus 1600, reference may be made to the content discussed above.

The present application embodiment provides a communication system, which includes the communication apparatus 1700 as shown in FIG. 17 and the communication apparatus 1800 as shown in FIG. 18. For the content of the communication apparatus 1700 and the communication apparatus 1800, reference may be made to the content discussed above.

An embodiment of the present application provides a computer storage medium for storing computer program instructions used by the apparatuses provided in the above embodiments of the present application, and a communication apparatus may execute the computer program instructions to execute any communication method provided in the embodiments of the present application.

An embodiment of the present application provides a computer program product containing instructions, and when the computer program product is running on a computer, any of the communication methods described above is caused to be implemented.

The computer storage medium may be any available medium or data storage device that can be accessed by a computer, including but not limited to a magnetic storage (such as a floppy disk, a hard disk, a magnetic tape, a magneto-optical disk (MO), etc.), an optical storage (such as a CD, a DVD, a BD, a HVD, etc.), and a semiconductor storage (such as a ROM, an EPROM, an EEPROM, a non-volatile memory (NAND FLASH), a solid-state drive (SSD)), etc.

The above method processing flow may be implemented by a software program, which may be stored in a storage medium, and when the stored software program is called, the above method steps are executed.

It should be understood by those skilled in the art that the embodiments of the present application may be provided as methods, systems, or computer program products. Therefore, the present application may take the form of an entirely hardware embodiment, an entirely software embodiment, or an embodiment combining software and hardware. Moreover, the present application may take the form of a computer program product implemented on one or more computer-usable storage media (including but not limited to a disk storage, a CD-ROM, an optical storage, etc.) containing computer-usable program codes.

The present application is described with reference to the flowcharts and/or block diagrams of the methods, devices (systems), and computer program products according to the present application. It should be understood that each process and/or block in the flowcharts and/or block diagrams, as well as the combination of processes and/or blocks in the flowcharts and/or block diagrams, may be implemented by computer program instructions. These computer program instructions may be provided to a processor of a general-purpose computer, a special-purpose computer, an embedded processor, or other programmable data processing devices to produce a machine, so that the instructions executed by the processor of the computer or other programmable data processing devices produce an apparatus for implementing the functions specified in one or more processes in the flowcharts and/or one or more blocks in the block diagrams.

These computer program instructions may also be stored in a computer-readable memory that can guide a computer or other programmable data processing devices to work in a specific manner, so that the instructions stored in the computer-readable memory produce a manufactured product including an instruction apparatus, which implements the functions specified in one or more processes in the flowcharts and/or one or more blocks in the block diagrams.

These computer program instructions may also be loaded onto a computer or other programmable data processing devices, so that a series of operating steps are executed on the computer or other programmable devices to produce computer-implemented processing, so that the instructions executed on the computer or other programmable devices provide steps for implementing the functions specified in one or more processes of the flowcharts and/or one or more blocks of the block diagrams.

Obviously, those skilled in the art may make various changes and variations to the present application without departing from the spirit and the scope of the present application. Thus, if these changes and variations of the present application fall within the scope of the claims of the present application and their equivalent technologies, the present application is also intended to include these changes and variations.

## Claims

1. A communication method, which is **characterized by** being applied to a first communication apparatus, the method comprising:
if *M* first uplink channels and *N* second uplink channels are to be sent on a first time domain resource, determining to multiplex uplink control information UCI corresponding to a target first uplink channel of the *M* first uplink channels to at least one second uplink channel of the *N* second uplink channels for transmission, and sending the at least one second uplink channel carrying the UCI; or,
if *M* first uplink channels and *N* second uplink channels are to be sent on a first time domain resource, dropping at least one second uplink channel of the *N* second uplink channels, and/or, sending a target first uplink channel of the *M* first uplink channels which corresponds to the at least one second uplink channel; or,
if *M* first uplink channels and *N* second uplink channels are to be sent on a first time domain resource, determining, from the *N* second uplink channels, at least one second uplink channel corresponding to a target first uplink channel of the *M* first uplink channels, and sending or dropping the at least one second uplink channel corresponding to the target first uplink channel of the *M* first uplink channels;
wherein *M* and *N* are not 1 simultaneously, and both *M* and *N* are integers greater than or equal to 1.

2. The method according to claim 1, wherein the at least one second uplink channel and the target first uplink channel have same information on a transmission parameter and/or same information on a physical resource, and the transmission parameter is a higher-layer parameter corresponding to transmission of an uplink channel.

3. The method according to claim 1 or 2, wherein the determining to multiplex the UCI corresponding to the target first uplink channel of the *M* first uplink channels to the at least one second uplink channel of the *N* second uplink channels for transmission comprises:
in a case where one or more first conditions are met, multiplexing the UCI corresponding to the target first uplink channel of the *M* first uplink channels to the at least one second uplink channel of the *N* second uplink channels for transmission;
wherein the first conditions comprise:
the at least one second uplink channel and the target first uplink channel have a same index or state of a transmission configuration indication; or,
the at least one second uplink channel and the target first uplink channel are both associated with a same control-resource-set related higher-layer parameter; or,
there is an overlap between a frequency domain resource of the at least one second uplink channel and a frequency domain resource of the target first uplink channel; or,
the at least one second uplink channel and the target first uplink channel are both indicated by same downlink control information DCI; or,
an index of a resource block RB of the at least one second uplink channel meets a second condition; or,
a resource of the at least one second uplink channel is associated with a resource or a resource group corresponding to the target first uplink channel.

4. The method according to claim 3, wherein the control-resource-set related higher-layer parameter comprises CORESETPoolIndex, and the at least one second uplink channel and the target first uplink channel being both associated with the same control-resource-set related higher-layer parameter comprises:
the at least one second uplink channel and the target first uplink channel are both associated with a value of the same control-resource-set related higher-layer parameter; or,
downlink control information for scheduling the at least one second uplink channel and downlink control information for scheduling the target first uplink channel are both associated with the same control-resource-set related higher-layer parameter.

5. The method according to claim 3 or 4, wherein the second condition comprises:
the index of the RB of the at least one second uplink channel is a smallest index among indexes of RBs of multiple second uplink channels of the *N* second uplink channels; or,
the index of the RB of the at least one second uplink channel is a largest index among indexes of RBs of multiple second uplink channels of the *N* second uplink channels; or,
a relative index of the RB of the at least one second uplink channel is same as a relative index of the target first uplink channel; or,
the index of the RB of each of the at least one second uplink channel is greater than a first threshold; or,
the index of the RB of each of the at least one second uplink channel is less than a first threshold; or,
the index of the RB of each of the at least one second uplink channel is an even number; or,
the index of the RB of each of the at least one second uplink channel is an odd number.

6. The method according to any one of claims 1 to 5, wherein,
at least two first uplink channels of the *M* first uplink channels carry same information; and/or,
at least two second uplink channels of the *N* second uplink channels carry same information.

7. The method according to any one of claims 1 to 6, wherein the target first uplink channel is the *M* first uplink channels; the determining to multiplex the UCI corresponding to the target first uplink channel of the *M* first uplink channels to the at least one second uplink channel of the *N* second uplink channels for transmission comprises:
determining to multiplex UCI corresponding to each first uplink channel of the *M* first uplink channels to at least one second uplink channel of the *N* second uplink channels for transmission.

8. The method according to claim 7, wherein the determining to multiplex the UCI corresponding to each first uplink channel of the *M* first uplink channels to the at least one second uplink channel of the *N* second uplink channels for transmission comprises:
simultaneously or sequentially determining to multiplex the UCI corresponding to each first uplink channel of the *M* first uplink channels to the at least one second uplink channel of the *N* second uplink channels for transmission.

9. The method according to claim 7 or 8, wherein at least one second uplink channel corresponding to one of any two first uplink channels of the *M* first uplink channels is same as or different from at least one second uplink channel corresponding to the other of the any two first uplink channels of the *M* first uplink channels.

10. The method according to claim 9, wherein after determining to multiplex the UCI corresponding to the target first uplink channel of the *M* first uplink channels to the at least one second uplink channel of the *N* second uplink channels for transmission, the method further comprises:
deleting or updating first information, wherein the first information comprises a serial number of the at least one second uplink channel.

11. The method according to any one of claims 1 to 8, further comprising:
determining that the at least one second uplink channel has an ability to carry the UCI; and/or,
determining that a time difference between an instant at which the at least one second uplink channel is sent and an instant at which the target first uplink channel is sent is less than or equal to a first time difference.

12. The method according to claim 1 or 2, wherein the dropping the at least one second uplink channel of the *N* second uplink channels comprises:
in a case where one or more first conditions are met, dropping the at least one second uplink channel of the *N* second uplink channels;
wherein the first conditions comprise:
the at least one second uplink channel and the target first uplink channel have a same index or state of a transmission configuration indication; or,
the at least one second uplink channel and the target first uplink channel are both associated with a same control-resource-set related higher-layer parameter; or,
there is an overlap between a frequency domain resource of the at least one second uplink channel and a frequency domain resource of the target first uplink channel; or,
the at least one second uplink channel and the target first uplink channel are both indicated by same downlink control information DCI; or,
an index of a resource block RB of the at least one second uplink channel meets a second condition; or,
a resource of the at least one second uplink channel is associated with a resource or a resource group corresponding to the target first uplink channel.

13. The method according to claim 12, wherein the control-resource-set related higher-layer parameter comprises CORESETPoolIndex, and the at least one second uplink channel and the target first uplink channel being both associated with the same control-resource-set related higher-layer parameter comprises:
the at least one second uplink channel and the target first uplink channel are both associated with a value of the same control-resource-set related higher-layer parameter; or,
downlink control information for scheduling the at least one second uplink channel and downlink control information for scheduling the target first uplink channel are both associated with the same control-resource-set related higher-layer parameter.

14. The method according to claim 12 or 13, wherein the second condition comprises:
the index of the RB of the at least one second uplink channel is a smallest index among indexes of RBs of multiple second uplink channels of the *N* second uplink channels; or,
the index of the RB of the at least one second uplink channel is a largest index among indexes of RBs of multiple second uplink channels of the *N* second uplink channels; or,
a relative index of the RB of the at least one second uplink channel is same as a relative index of the target first uplink channel; or,
the index of the RB of each of the at least one second uplink channel is greater than a first threshold; or,
the index of the RB of each of the at least one second uplink channel is less than a first threshold; or,
the index of the RB of each of the at least one second uplink channel is an even number; or,
the index of the RB of each of the at least one second uplink channel is an odd number.

15. The method according to any one of claims 12 to 14, wherein,
at least two first uplink channels of the *M* first uplink channels carry same information; and/or,
at least two second uplink channels of the *N* second uplink channels carry same information.

16. The method according to any one of claims 12 to 15, wherein at least one second uplink channel corresponding to one of any two first uplink channels of the *M* first uplink channels is same as or different from at least one second uplink channel corresponding to the other of the any two first uplink channels of the *M* first uplink channels.

17. The method according to claim 1 or 2, wherein the determining, from the *N* second uplink channels, the at least one second uplink channel corresponding to the target first uplink channel of the *M* first uplink channels, and sending or dropping the at least one second uplink channel corresponding to the target first uplink channel of the *M* first uplink channels comprise:
in a case where one or more first conditions are met, sending or dropping the at least one second uplink channel which is determined from the *N* second uplink channels and corresponds to the target first uplink channel of the *M* first uplink channels;
wherein the first conditions comprise:
determining, from the *N* second uplink channels, at least one second uplink channel which has a same index or state of a transmission configuration indication as the target first uplink channel; or,
determining, from the *N* second uplink channels, at least one second uplink channel which is associated with a same control-resource-set related higher-layer parameter as the target first uplink channel; or,
determining, from the *N* second uplink channels, at least one second uplink channel of which a frequency domain resource overlaps with a frequency domain resource of the target first uplink channel; or,
determining, from the *N* second uplink channels, at least one second uplink channel which is indicated by same downlink control information DCI as the target first uplink channel; or,
determining, from the *N* second uplink channels, at least one second uplink channel of which an index of a resource block RB meets a second condition; or,
determining, from the *N* second uplink channels, at least one second uplink channel of which a resource is associated with a resource or a resource group corresponding to the target first uplink channel.

18. The method according to claim 17, wherein the control-resource-set related higher-layer parameter comprises CORESETPoolIndex, and the determining, from the *N* second uplink channels, the at least one second uplink channel which is associated with the same control-resource-set related higher-layer parameter as the target first uplink channel comprises:
determining, from the *N* second uplink channels, at least one second uplink channel which is associated with a value of the same control-resource-set related higher-layer parameter as the target first uplink channel; or,
determining, from the *N* second uplink channels, at least one second uplink channel, wherein downlink control information for scheduling the at least one second uplink channel and downlink control information for scheduling the target first uplink channel are both associated with the same control-resource-set related higher-layer parameter.

19. The method according to claim 17 or 18, wherein the second condition comprises:
the index of the RB of the at least one second uplink channel is a smallest index among indexes of RBs of multiple second uplink channels of the *N* second uplink channels; or,
the index of the RB of the at least one second uplink channel is a largest index among indexes of RBs of multiple second uplink channels of the *N* second uplink channels; or,
a relative index of the RB of the at least one second uplink channel is same as a relative index of the target first uplink channel; or,
the index of the RB of each of the at least one second uplink channel is greater than a first threshold; or,
the index of the RB of each of the at least one second uplink channel is less than a first threshold; or,
the index of the RB of each of the at least one second uplink channel is an even number; or,
the index of the RB of each of the at least one second uplink channel is an odd number.

20. The method according to any one of claims 17 to 19, wherein
at least two first uplink channels of the *M* first uplink channels carry same information; and/or,
at least two second uplink channels of the *N* second uplink channels carry same information.

21. The method according to any one of claims 17 to 20, wherein at least one second uplink channel corresponding to one of any two first uplink channels of the *M* first uplink channels is same as or different from at least one second uplink channel corresponding to the other of the any two first uplink channels of the *M* first uplink channels.

22. The method according to any one of claims 1 to 21, wherein the UCI corresponding to the target first uplink channel comprises a hybrid automatic repeat request, channel state information, or a positive scheduling request.

23. The method according to any one of claims 1 to 22, wherein the first uplink channels are physical uplink control channels; the second uplink channels are physical uplink shared channels.

24. A communication method, which is **characterized by** being applied to a second communication apparatus, the method comprising:
if a first communication apparatus is to send *M* first uplink channels and *N* second uplink channels on a first time domain resource: receiving at least one second uplink channel on the first time domain resource, wherein the at least one second uplink channel is used to carry UCI; demodulating the at least one second uplink channel to obtain at least one piece of UCI, wherein information comprised in each of the at least one piece of UCI is same, or, information comprised in each of the at least one piece of UCI is different; or,
if a first communication apparatus is to send *M* first uplink channels and *N* second uplink channels on a first time domain resource, and the first communication apparatus drops at least one second uplink channel of the *N* second uplink channels, and/or, sends a target first uplink channel of the *M* first uplink channels which corresponds to the at least one second uplink channel: receiving, within the first time domain resource, the target first uplink channel corresponding to the at least one second uplink channel, and demodulating the target first uplink channel to obtain UCI; or,
if a first communication apparatus is to send *M* first uplink channels and *N* second uplink channels on a first time domain resource, and the first communication apparatus determines at least one second uplink channel corresponding to a target first uplink channel of the *M* first uplink channels from the *N* second uplink channels, and sends or drops the at least one second uplink channel corresponding to the target first uplink channel of the *M* first uplink channels: receiving the at least one second uplink channel within the first time domain resource;
wherein *M* and *N* are not 1 simultaneously, and both *M* and *N* are integers greater than or equal to 1.

25. The method according to claim 24, wherein the at least one second uplink channel and the target first uplink channel have same information on a transmission parameter and/or same information on a physical resource, and the transmission parameter is a higher-layer parameter corresponding to transmission of an uplink channel.

26. The method according to claim 24 or 25, wherein the at least one second uplink channel meets a first condition, and the first condition comprises:
the at least one second uplink channel and the target first uplink channel have a same index or state of a transmission configuration indication; or,
the at least one second uplink channel and the target first uplink channel are both associated with a same control-resource-set related higher-layer parameter; or,
there is an overlap between a frequency domain resource of the at least one second uplink channel and a frequency domain resource of the target first uplink channel; or,
the at least one second uplink channel and the target first uplink channel are both indicated by same downlink control information DCI; or,
an index of a resource block RB of the at least one second uplink channel meets a second condition; or,
a resource of the at least one second uplink channel is associated with a resource or a resource group corresponding to the target first uplink channel.

27. The method according to claim 26, wherein the control-resource-set related higher-layer parameter comprises CORESETPoolIndex, and the at least one second uplink channel and the target first uplink channel being both associated with the same control-resource-set related higher-layer parameter comprises:
the at least one second uplink channel and the target first uplink channel are both associated with a value of the same control-resource-set related higher-layer parameter; or,
downlink control information for scheduling the at least one second uplink channel and downlink control information for scheduling the target first uplink channel are both associated with the same control-resource-set related higher-layer parameter.

28. The method according to claim 26 or 27, wherein the second condition comprises:
the index of the RB of the at least one second uplink channel is a smallest index among indexes of RBs of multiple second uplink channels of the *N* second uplink channels; or,
the index of the RB of the at least one second uplink channel is a largest index among indexes of RBs of multiple second uplink channels of the *N* second uplink channels; or,
a relative index of the RB of the at least one second uplink channel is same as a relative index of the target first uplink channel; or,
the index of the RB of each of the at least one second uplink channel is greater than a first threshold; or,
the index of the RB of each of the at least one second uplink channel is less than a first threshold; or,
the index of the RB of each of the at least one second uplink channel is an even number; or,
the index of the RB of each of the at least one second uplink channel is an odd number.

29. The method according to claim 24, wherein the receiving the at least one second uplink channel further comprises:
simultaneously or sequentially receiving the at least one second uplink channel.

30. The method according to claim 29, wherein the sequentially receiving the at least one second uplink channel comprises:
deleting or updating first information, wherein the first information comprises a serial number of the at least one second uplink channel.

31. The method according to any one of claims 24 to 30, further comprising:
determining that the at least one second uplink channel has an ability to carry the UCI; and/or,
determining that a time difference between an instant at which the at least one second uplink channel is sent and an instant at which the target first uplink channel is sent is less than or equal to a first time difference.

32. The method according to claim 24 or 25, wherein the dropping the at least one second uplink channel of the *N* second uplink channels comprises:
in a case where one or more first conditions are met, dropping the at least one second uplink channel of the *N* second uplink channels;
wherein the first conditions comprise:
the at least one second uplink channel and the target first uplink channel have a same index or state of a transmission configuration indication; or,
the at least one second uplink channel and the target first uplink channel are both associated with a same control-resource-set related higher-layer parameter; or,
there is an overlap between a frequency domain resource of the at least one second uplink channel and a frequency domain resource of the target first uplink channel; or,
the at least one second uplink channel and the target first uplink channel are both indicated by same downlink control information DCI; or,
an index of a resource block RB of the at least one second uplink channel meets a second condition; or,
a resource of the at least one second uplink channel is associated with a resource or a resource group corresponding to the target first uplink channel.

33. The method according to claim 32, wherein the control-resource-set related higher-layer parameter comprises CORESETPoolIndex, and the at least one second uplink channel and the target first uplink channel being both associated with the same control-resource-set related higher-layer parameter comprises:
the at least one second uplink channel and the target first uplink channel are both associated with a value of the same control-resource-set related higher-layer parameter; or,
downlink control information for scheduling the at least one second uplink channel and downlink control information for scheduling the target first uplink channel of the *M* first uplink channels are both associated with the same control-resource-set related higher-layer parameter.

34. The method according to claim 32 or 33, wherein the second condition comprises:
the index of the RB of the at least one second uplink channel is a smallest index among indexes of RBs of multiple second uplink channels of the *N* second uplink channels; or,
the index of the RB of the at least one second uplink channel is a largest index among indexes of RBs of multiple second uplink channels of the *N* second uplink channels; or,
a relative index of the RB of the at least one second uplink channel is same as a relative index of the target first uplink channel; or,
the index of the RB of each of the at least one second uplink channel is greater than a first threshold; or,
the index of the RB of each of the at least one second uplink channel is less than a first threshold; or,
the index of the RB of each of the at least one second uplink channel is an even number; or,
the index of the RB of each of the at least one second uplink channel is an odd number.

35. The method according to claim 24 or 25, wherein the determining, from the *N* second uplink channels, the at least one second uplink channel corresponding to the target first uplink channel of the *M* first uplink channels, and sending or dropping the at least one second uplink channel corresponding to the target first uplink channel of the *M* first uplink channels comprise:
in a case where one or more first conditions are met, sending or dropping the at least one second uplink channel which is determined from the *N* second uplink channels and corresponds to the target first uplink channel of the *M* first uplink channels;
wherein the first conditions comprise:
determining, from the *N* second uplink channels, at least one second uplink channel which has a same index or state of a transmission configuration indication as the target first uplink channel; or,
determining, from the *N* second uplink channels, at least one second uplink channel which is associated with a same control-resource-set related higher-layer parameter as the target first uplink channel; or,
determining, from the *N* second uplink channels, at least one second uplink channel of which a frequency domain resource overlaps with a frequency domain resource of the target first uplink channel; or,
determining, from the *N* second uplink channels, at least one second uplink channel which is indicated by same downlink control information DCI as the target first uplink channel; or,
determining, from the *N* second uplink channels, at least one second uplink channel of which an index of a resource block RB meets a second condition; or,
determining, from the *N* second uplink channels, at least one second uplink channel of which a resource is associated with a resource or a resource group corresponding to the target first uplink channel.

36. The method according to claim 35, wherein the control-resource-set related higher-layer parameter comprises CORESETPoolIndex, and the determining, from the *N* second uplink channels, the at least one second uplink channel which is associated with the same control-resource-set related higher-layer parameter as the target first uplink channel comprises:
determining, from the *N* second uplink channels, at least one second uplink channel which is associated with a value of the same control-resource-set related higher-layer parameter as the target first uplink channel; or,
determining, from the *N* second uplink channels, at least one second uplink channel, wherein downlink control information for scheduling the at least one second uplink channel and downlink control information for scheduling the target first uplink channel are both associated with the same control-resource-set related higher-layer parameter.

37. The method according to claim 35 or 36, wherein the second condition comprises:
the index of the RB of the at least one second uplink channel is a smallest index among indexes of RBs of multiple second uplink channels of the *N* second uplink channels; or,
the index of the RB of the at least one second uplink channel is a largest index among indexes of RBs of multiple second uplink channels of the *N* second uplink channels; or,
a relative index of the RB of the at least one second uplink channel is same as a relative index of the target first uplink channel; or,
the index of the RB of each of the at least one second uplink channel is greater than a first threshold; or,
the index of the RB of each of the at least one second uplink channel is less than a first threshold; or,
the index of the RB of each of the at least one second uplink channel is an even number; or,
the index of the RB of each of the at least one second uplink channel is an odd number.

38. A communication apparatus, which is **characterized by** comprising a processor, a transceiver and a memory; wherein:
the memory is configured to store a computer program;
the transceiver is configured to send and receive information under control of the processor;
the processor is configured to read the computer program in the memory and perform following steps:
if *M* first uplink channels and *N* second uplink channels are to be sent on a first time domain resource, determining to multiplex uplink control information UCI corresponding to a target first uplink channel of the *M* first uplink channels to at least one second uplink channel of the *N* second uplink channels for transmission, and sending the at least one second uplink channel carrying the UCI; or,
if *M* first uplink channels and *N* second uplink channels are to be sent on a first time domain resource, dropping at least one second uplink channel of the *N* second uplink channels, and/or, sending a target first uplink channel of the *M* first uplink channels which corresponds to the at least one second uplink channel; or,
if *M* first uplink channels and *N* second uplink channels are to be sent on a first time domain resource, determining, from the N second uplink channels, at least one second uplink channel corresponding to a target first uplink channel of the *M* first uplink channels, and sending or dropping the at least one second uplink channel corresponding to the target first uplink channel of the *M* first uplink channels;
wherein *M* and *N* are not 1 simultaneously, and both *M* and *N* are integers greater than or equal to 1.

39. The apparatus according to claim 38, wherein the at least one second uplink channel and the target first uplink channel have same information on a transmission parameter and/or same information on a physical resource, and the transmission parameter is a higher-layer parameter corresponding to transmission of an uplink channel.

40. The apparatus according to claim 38 or 39, wherein the processor is specifically configured to:
in a case where one or more first conditions are met, multiplex the UCI corresponding to the target first uplink channel of the *M* first uplink channels to the at least one second uplink channel of the *N* second uplink channels for transmission;
wherein the first conditions comprise:
the at least one second uplink channel and the target first uplink channel have a same index or state of a transmission configuration indication; or,
the at least one second uplink channel and the target first uplink channel are both associated with a same control-resource-set related higher-layer parameter; or,
there is an overlap between a frequency domain resource of the at least one second uplink channel and a frequency domain resource of the target first uplink channel; or,
the at least one second uplink channel and the target first uplink channel are both indicated by same DCI; or,
an index of an RB of the at least one second uplink channel meets a second condition; or,
a resource of the at least one second uplink channel is associated with a resource or a resource group corresponding to the target first uplink channel.

41. A communication apparatus, which is **characterized by** comprising a processor, a transceiver and a memory; wherein:
the memory is configured to store a computer program;
the transceiver is configured to send and receive information under control of the processor;
the processor is configured to read the computer program in the memory and perform following steps:
if a first communication apparatus is to send *M* first uplink channels and *N* second uplink channels on a first time domain resource: receiving at least one second uplink channel on the first time domain resource, wherein the at least one second uplink channel is used to carry UCI; demodulating the at least one second uplink channel to obtain at least one piece of UCI, wherein information comprised in each of the at least one piece of UCI is same, or, information comprised in each of the at least one piece of UCI is different; or,
if a first communication apparatus is to send *M* first uplink channels and *N* second uplink channels on a first time domain resource, and the first communication apparatus drops at least one second uplink channel of the *N* second uplink channels, and/or, sends a target first uplink channel of the *M* first uplink channels which corresponds to the at least one second uplink channel: receiving, within the first time domain resource, the target first uplink channel corresponding to the at least one second uplink channel, and demodulating the target first uplink channel to obtain UCI; or,
if a first communication apparatus is to send *M* first uplink channels and *N* second uplink channels on a first time domain resource, and the first communication apparatus drops determines at least one second uplink channel corresponding to a target first uplink channel of the *M* first uplink channels from the *N* second uplink channels, and sends or drops the at least one second uplink channel corresponding to the target first uplink channel of the *M* first uplink channels: receiving the at least one second uplink channel within the first time domain resource;
wherein *M* and *N* are not 1 simultaneously, and both *M* and *N* are integers greater than or equal to 1.

42. The apparatus according to claim 41, wherein the at least one second uplink channel and the target first uplink channel have same information on a transmission parameter and/or same information on a physical resource, and the transmission parameter is a higher-layer parameter corresponding to transmission of an uplink channel.

43. The apparatus according to claim 41 or 42, wherein the at least one second uplink channel meets a first condition, and the first condition comprises:
the at least one second uplink channel and the target first uplink channel have a same index or state of a transmission configuration indication; or,
the at least one second uplink channel and the target first uplink channel are both associated with a same control-resource-set related higher-layer parameter; or,
there is an overlap between a frequency domain resource of the at least one second uplink channel and a frequency domain resource of the target first uplink channel; or,
the at least one second uplink channel and the target first uplink channel are both indicated by same downlink control information DCI; or,
an index of a resource block RB of the at least one second uplink channel meets a second condition; or,
a resource of the at least one second uplink channel is associated with a resource or a resource group corresponding to the target first uplink channel.

44. A communication apparatus, which is **characterized by** comprising:
a transceiving unit, configured to: send the at least one second uplink channel carrying UCI; or, send a target first uplink channel of the *M* first uplink channels which corresponds to the at least one second uplink channel; or, send at least one second uplink channel corresponding to a target first uplink channel of the *M* first uplink channels;
a processing unit, configured to: if *M* first uplink channels and *N* second uplink channels are to be sent on a first time domain resource, determine to multiplex uplink control information UCI corresponding to a target first uplink channel of the *M* first uplink channels to at least one second uplink channel of the *N* second uplink channels for transmission; or if *M* first uplink channels and *N* second uplink channels are to be sent on a first time domain resource, drop at least one second uplink channel of the *N* second uplink channels, or, a target first uplink channel of the uplink channels which corresponds to the at least one second uplink channel; or if *M* first uplink channels and *N* second uplink channels are to be sent on a first time domain resource, determine, from the *N* second uplink channels, at least one second uplink channel corresponding to a target first uplink channel of the *M* first uplink channels, and drop the at least one second uplink channel corresponding to the target first uplink channel of the *M* first uplink channels;
wherein *M* and *N* are not 1 simultaneously, and both *M* and *N* are integers greater than or equal to 1.

45. A communication apparatus, which is **characterized by** comprising:
a transceiving unit, configured to: receive at least one second uplink channel on a first time domain resource, wherein the at least one second uplink channel is used to carry UCI; or, receive a target first uplink channel corresponding to the at least one second uplink channel within a first time domain resource; or, receive at least one second uplink channel within a first time domain resource;
a processing unit, configured to: demodulate the at least one second uplink channel to obtain at least one piece of UCI, wherein information comprised in each of the at least one piece of UCI is same, or, information comprised in each of the at least one piece of UCI is different; or, demodulate the target first uplink channel to obtain UCI;
wherein *M* and *N* are not 1 simultaneously, and *M* and *N* are both integers greater than or equal to 1.

46. A computer storage medium, which is **characterized in that** the computer storage medium stores computer executable instructions, and the computer executable instructions are used to cause the computer to execute the method according to any one of claims 1 to 23 and 24 to 37.
